# EUROPEAN PATENT SPECIFICATION

(11) **EP 3 084 629 B1**
(45) Date of publication and mention of the grant of the patent: **04.01.2023**
(21) Application number: 14871390.2
(22) Date of filing: 16.12.2014
(51) Int. Cl.: G06F 15/163, G06F 15/173

(54) **HIERARCHICAL AND PARALLEL PARTITION NETWORKS**
HIERARCHISCHE UND PARALLELE PARTITIONSNETZWERKE
RÉSEAUX DE PARTITIONS HIÉRARCHIQUE ET PARALLÈLE

(30) Priority: 20.12.2013 US 201314137108
(43) Date of publication of application: 26.10.2016
(73) Proprietor: Intel Corporation, Santa Clara, CA 95054 (US)
(72) Inventor: MISHRA, Asit K., Hillsboro, Oregon 97124 (US); DAVID, Howard S., Portland, Oregon 97221 (US); DUNNING, David S., Portland, Oregon 97229 (US)
(74) Representative: Rummler, Felix
(86) International application number: PCT/US2014/070686
(87) International publication number: WO 2015/095243

(56) References cited:
- JP-A- H07 230 435
- US-A- 4 814 970
- US-A- 5 471 580
- US-A- 5 471 580
- US-A- 5 805 839
- US-A1- 2009 064 140

## Description

### TECHNICAL FIELD

The present invention relates generally to devices having multiple interconnected processors and memories.

### BACKGROUND

Integrated circuit devices such as microprocessors may have multiple processors and multiple memories coupled to the processors. The processors, often referred to as processing engines or cores, may be subdivided into a number of groups often referred to as blocks, clusters or islands. Each block may have a plurality of processors and one or more memories which are tightly connected to each of the processors by a bus or other network. The blocks may in turn be connected to each other and to the system memory by a network. In this manner, each processor of each block may communicate over the network with a processor or memory of the same block or a processor or memory of another block, or the system memory itself. The network may employ a number of buffers to buffer packets of data awaiting access to the network or a segment of the network.

From US5471580A is known a hierarchical network that hierarchically connects a plurality of networks whose nodes are mutually connected by connection paths as a p-array n-dimensional cube to configure a single network. A plurality of nodes are selected from lower layer p-array n-dimensional cubes, and the selected gate nodes are mutually connected as a p-array m-dimensional cube to configure a p-array m-dimensional network on the next layer. Similarly, gate nodes are selected from a plurality of next-layer p-array m-dimensional networks, and mutually connected as a p-array 1-dimensional cube to configure a p-array 1-dimensional network in a further upper layer, thereby configuring a single hierarchical network as a whole.

In US 2009/064140 A1 a method, computer program product, and system are described for transmitting data from a first processor of a data processing system to a second processor of the data processing system. In one or more switches, a set of virtual channels is created, the one or more switches comprising, for each processor, a corresponding switch in the one or more switches. The data is transmitted from the first processor to the second processor through a path comprising a subset of processors of a set of processors in the data processing system. In each processor of the subset of processors, the data is stored in a virtual channel of a corresponding switch before transmitting the data to a next processor. The virtual channel of the corresponding switch in which the data is stored corresponds to a position of the processor in the path through which the data is transmitted.

### SUMMARY OF INVENTION

The invention is defined by the appended independent claims. Advantageous features of the invention are set out in the accompanying dependent claims, as appended.

### BRIEF DESCRIPTION OF THE DRAWINGS

FIG. 1 is a schematic diagram of one embodiment of a computer architecture device employing hierarchical and parallel partition networks in accordance with one aspect of the present description.
FIG. 2 is a schematic diagram of one example of a hierarchical aspect of the hierarchical and parallel partition networks of the computer architecture device of FIG. 1
FIG. 3 is a more detailed schematic diagram of one embodiment of a block hierarchical level of the hierarchical and parallel partition networks of FIG. 1.
FIG. 4 is a more detailed schematic diagram of a unit hierarchical level of one partition of the hierarchical and parallel partition networks of FIG. 1.
FIG. 5 is a more detailed schematic diagram of one embodiment of a unit-to-unit hierarchical level of one partition of the hierarchical and parallel partition networks of FIG. 1.
FIG.6 is a more detailed schematic diagram of one example of the hierarchical and parallel partition networks of FIG. 1.
FIG. 7 is a more detailed schematic diagram of a portion of the hierarchical and parallel partition networks of FIG. 1.
FIG.8 is a more detailed schematic diagram of a portion of the hierarchical and parallel partition networks of FIG. 1.
FIG. 9 is a schematic diagram of a packet employing a parallel partition network ID
FIGs. 10a, 10b depict operations of hierarchical and parallel partition network control logic in accordance with one aspect of the present description.

### DESCRIPTION OF EMBODIMENTS

As explained in greater detail below, for tightly coupled processors and memories organized in small blocks (also referred to as clusters or islands), in accordance with one aspect of the present description, hierarchical switches are provided to interconnect these blocks in a manner which is believed to improve the energy efficiency of communications both among the blocks and between the blocks and the system memory. In one embodiment, a switch is provided to interconnect a set of blocks organized as a "unit," and a local memory controller for that unit, at a hierarchical level, referred to herein as the unit hierarchical level or simply the unit level. In addition, the switch, referred to herein as a unit level switch, may have links to other unit level switches and other, non-local memory controllers which may also be organized as hierarchical switches.

A unit level switch for block to block communications may not have buffering in order to reduce the energy cost expended by the unit level switch. Instead, buffers at the end-points of die-to-die communication channels between the microprocessor die and a memory controller die, for example, are provided for intermediate storage.

It is believed that a hierarchical network architecture in accordance with the present description can provide improved predictability and uniformity in communication latencies from each block to a local memory controller assigned a unit. Furthermore, it is believed that non-local memory controllers may similarly be more equidistant in terms of latency from a central switch such as a unit level switch or in some embodiments, a unit-to-unit level switch. Still further, local block to block communications may have increased energy efficiency and may be restricted to a local switch such as a unit level switch. Moreover, it is believed that a hierarchical network architecture in accordance with the present description may provide improved scalability. For example, when adding more blocks or memory controllers, additional levels or hierarchies may be added to maintain energy efficient communication at the local level.

In another aspect of the present description, a network having a switch such as a unit level switch and a unit-to-unit level switch, for example, may be partitioned into multiple unit level parallel partition networks, each having parallel partition switches and unit-to-unit level parallel partition switches, respectively. It is believed that such an arrangement may further reduce the energy traversal cost through a switch. For example, energy expenditure may be reduced by the same or similar factor as the number of parallel partition switches the monolithic switch is partitioned into by trading reduced bandwidth for reduced energy consumption.

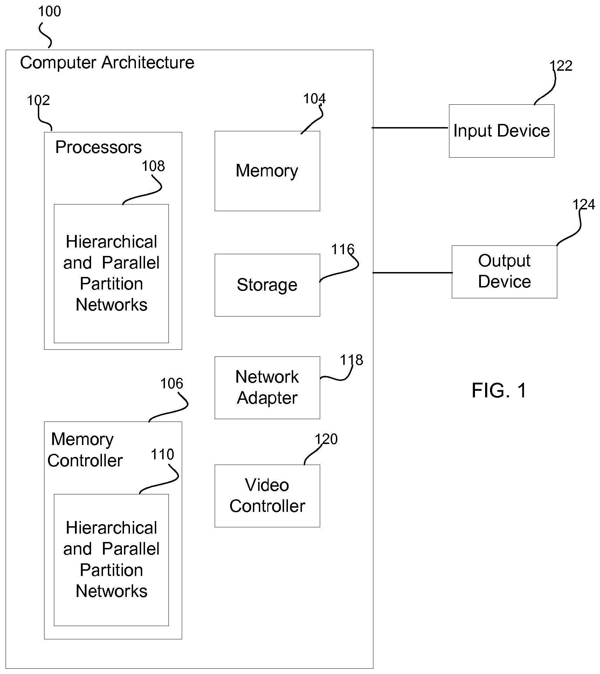

FIG. 1 illustrates one embodiment of a computer architecture device 100 employing hierarchical and parallel partition network communication in accordance with one aspect of the present description. The computer architecture device 100 may comprise any computing device, such as a mainframe, server, personal computer, workstation, telephony device, network appliance, virtualization device, storage controller, portable or mobile devices (e.g., laptops, netbooks, tablet computers, personal digital assistant (PDAs), portable media players, portable gaming devices, digital cameras, mobile phones, smartphones, feature phones, etc.) or component (e.g. system on a chip, processor, bridge, memory controller, memory, etc.). The architecture device 100 may include a plurality of processors 102 on a microprocessor die, a system memory 104 (e.g., a volatile or nonvolatile memory device) on one or more memory dies, and a memory controller 106 on one or more memory controller dies. The memory controller 106 controls input and output operations to and from the memory 104.

As explained in greater detail below, the processors 102 and the memory controller 106 each include hierarchical and parallel partition networks 108, 110, respectively. The hierarchical and parallel partition networks 108, 110, may improve for example, energy efficiency in communications among the various processors, and memories of the device 100. It is appreciated that other features and advantages may be realized, depending upon the particular application.

In the illustrated embodiment, the hierarchical and parallel partition networks 108 are built in to the die or dies of the processors 102, and the hierarchical and parallel partition networks 110 are built in to the die or dies of the memory controller 106. It is appreciated however that the hierarchical and parallel partition networks 108, 110 may be built in to other circuits of the computer architecture device 100, depending upon the particular application.

The computer architecture device 100 may further include storage 116 (e.g., a non-volatile storage, such as magnetic disk drives, optical disk drives, a tape drive, flash memory, etc.). The storage 116 may comprise an internal storage device or an attached or network accessible storage. Programs in the storage 116 are loaded into the memory 104 and executed by one or more processors of the processors 102 in a manner known in the art. The computer architecture device 100 further includes a network controller or adapter 118 to enable communication with an external network, such as an Ethernet, a Fiber Channel Arbitrated Loop, etc. Further, the architecture may include a video controller 120 to render information on a display monitor, where the video controller 120 may be embodied on a video card or integrated on integrated circuit components mounted on a motherboard or other substrate. An input device 122 is used to provide input to the processor 102, and may include a keyboard, mouse, pen-stylus, microphone, touch sensitive display screen, input pins, sockets, or any other activation or input mechanism known in the art. An output device 124 is capable of rendering information transmitted from the processors 102, or other component, such as a display monitor, printer, storage, output pins, sockets, etc. The network adapter 118 may embodied on a network card, such as a Peripheral Component Interconnect (PCI) card, PCI-express, or some other I/O card, or on integrated circuit components mounted on a motherboard or other substrate.

One or more of the components of the device 100 may be omitted, depending upon the particular application. For example, a network router may lack a video controller 120, for example. Also, any one or more of the components of the computer architecture device 100 may include one or more integrated circuits employing hierarchical and parallel partition network communication in accordance with one aspect of the present description.

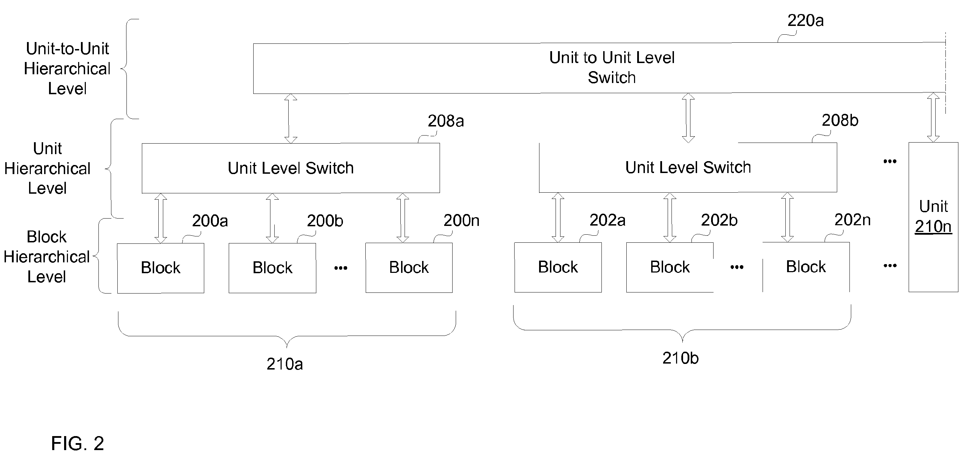

FIG. 2 shows a plurality of blocks 200a, 200b, ... 200n, 202a, 202b, ... 202n etc. Each block defines a block level of a first hierarchical level referred to herein as the block hierarchical level or simply the block level. As described in greater detail below, each block of the blocks 200a, 200b, ... 200n, 202a, 202b, ... 202n etc. includes a plurality of processors and a plurality of memories interconnected by a block network.

The plurality of blocks 200a, 200b, ... 200n are organized and interconnected by a unit level switch 208a to form a first unit 210a. Similarly, the plurality of blocks 202a, 202b, ... 202n are interconnected by a second unit level switch 208b to form a second unit 210b. Additional units as represented schematically as unit 210n in FIG. 2 may be formed in a similar manner with additional blocks and unit level switches not individually shown in FIG. 2.

Each unit of the plurality of units 210a, 210b ... 210n, defines a unit level of a second hierarchical level which is higher than that of the block level. The unit level of the second hierarchical level is referred to herein as the unit hierarchical level or simply the unit level.

A plurality of units including units 210a, 210b ... 210n are organized and interconnected by a unit-to-unit level switch 220a. The plurality of units including unit 210a, 210b, ... 210n interconnected by the unit-to-unit level switch 220a define a unit-to-unit level of a third hierarchical level which is higher than that of the unit level. The unit-to-unit level of the third hierarchical level is referred to herein as the unit-to-unit hierarchical level or simply the unit-to-unit level.

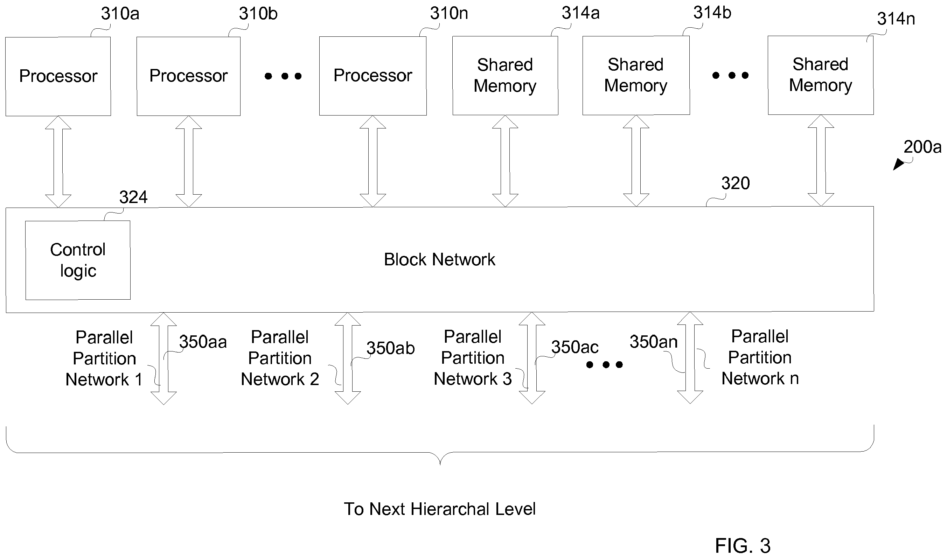

FIG. 3 shows one example of block level network interconnections for a block such as the block 200a of FIG. 2. The network interconnections for block 200a of FIG. 3 is representative of the block level network interconnections for each of the blocks 200a, 200b, ... 200n of the unit 210a, the blocks 202a, 202b, ... 202n of the unit 210b, and the blocks of the remaining units including unit n.

The block 200a includes a plurality of processing engines, cores or other processors 310a, 310b ... 310n and a plurality of shared memories 314a, 314b ... 314n interconnected by a block network 320 which may be a serial or parallel bus, or cross-bar or matrix switch network, for example. Other types of networks may be used to interconnect the components of the block, depending upon the particular application. Each processor 310a, 310b ... 310n may communicate locally with any of the other processors 310a, 310b ... 310n and any of the shared memories 314a, 314b ... 314n of the block 200a over the block network 320. Access to the block network 320 is granted by control logic 324 which arbitrates conflicting requests for access to the block network 320. Once granted access, a processor 310a, 310b ... 310n may read or write a packet of data from or to, respectively, any of the other processors 310a, 310b ... 310n and any of the shared memories 314a, 314b ... 314n of the block 200a over the block network 320. The block network 320 may lack a buffer to reduce energy expenditure. However, it is appreciated that the block network 320 or one or more blocks may buffer packets in a local buffer coupled to the block network 320.

In accordance with another aspect of the present description, the interconnection of the blocks such as the block 200a, with other blocks of the device 100, and with the memory controller 106 of the device 100, is partitioned into a plurality of parallel partition packet networks, that is, parallel partition packet network 1, parallel partition packet network 2 ... parallel partition packet network n. Each parallel partition packet network 1, 2, ... n, is independent of the other parallel partition packet networks of the plurality of parallel partition packet networks. Thus, a processor such as the processor 310a, for example, of the block 200a, for example, may transmit a packet of data to another block or to the memory 106 over a selected parallel partition packet network such as the parallel partition packet network 1, for example, without transmitting the packet in whole or in part over the other parallel partition packet networks 2 ... n.

In the claimed embodiment, the processors 310a, 310b ... 310n and the shared memories 314a, 314b ... 314n interconnected by the block network 320 are assigned priority for a particular parallel partition packet network. Thus, processor 310a and shared memory 314a, for example, may be assigned priority to transmit or receive packets over parallel partition packet network 1, for example. In a similar manner, processor 310b and shared memory 314b, for example, may be assigned priority to transmit or receive packets over parallel partition packet network 2, for example. The control logic 324 of the block network 320 includes parallel partition packet network control logic which selects the parallel partition packet network of the plurality of parallel partition packet networks 1, 2, ... n, assigned to a particular processor or shared memory, and transmits a packet for that processor or shared memory through the selected parallel partition packet network independent of the other parallel partition packet networks. Thus, packets on a common bus or cross bar network may be demultiplexed and directed to the assigned parallel partition packet network. The particular assignments may vary depending upon the number of processors, shared memories and parallel partition packet networks, or other factors, depending upon the particular application.

It is believed that partitioning the block to block and block to system memory controller interconnections into independent, parallel partition networks may reduce energy usage. For example, each independent parallel partition network may have reduced energy usage resulting from a lower bandwidth since the packet traffic is distributed over other independent parallel partition packet networks for each block.

In accordance with another aspect of the present description, each parallel partition packet network 1, 2, ... n, has multiple hierarchical levels. FIG. 3 depicts a block level hierarchical level for each parallel partition packet network, in which each parallel partition packet network, parallel partition packet network 1, parallel partition packet network 2 ... parallel partition packet network n, is coupled to the block network 320 of each block of the device 100, as depicted for the block 200a, for example. As further depicted in FIG. 3, each parallel partition packet network, parallel partition packet network 1, parallel partition packet network 2 ... parallel partition packet network n, of block 200a, is coupled by a parallel partition packet network connection 350aa, 350ab ... 350an, respectively, to the next higher hierarchical level, which is the unit level in the illustrated embodiment. In a similar manner, each parallel partition packet network, parallel partition packet network 1, parallel partition packet network 2 ... parallel partition packet network n, of each of the remaining blocks of the device 100 are similarly coupled by parallel partition packet network connections to the next higher hierarchical level, which is the unit level in the illustrated embodiment.

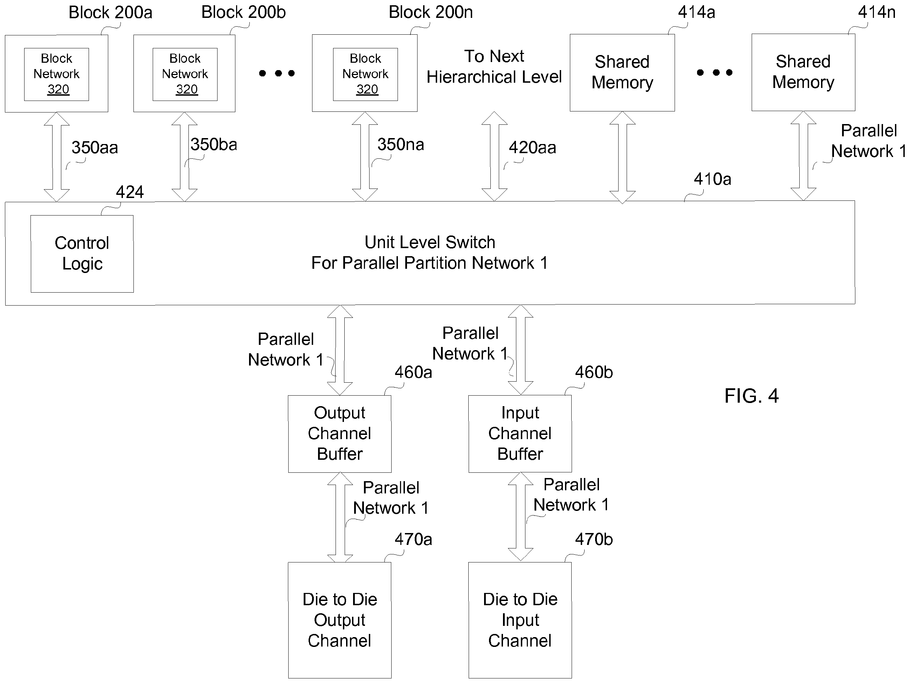

FIG. 4 shows one example of the parallel partition packet network 1 at a unit level for the unit 210a, for example, of FIG. 2. The unit level parallel partition packet network 1 for the unit 210a of FIG. 4 is representative of the each of the unit level parallel partition packet networks 2, 3 ... n of the unit 210a. The unit level parallel partition packet networks 1, 2, ... n, of the unit 210a are representative of the unit level parallel partition packet networks 1, 2, ... n, of the unit 210b, and the unit level parallel partition packet networks 1, 2, ... n of the remaining units including unit n.

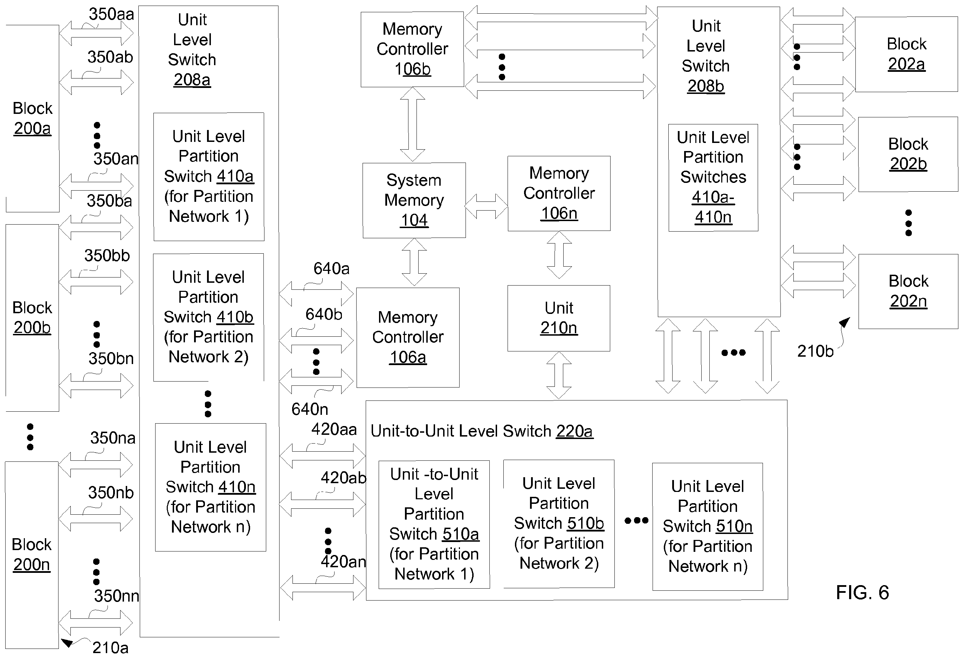

As shown in FIG. 4, the parallel partition packet network connection 350aa (FIGs. 3 ,4) of the parallel partition packet network 1 is coupled to a unit level parallel partition switch 410a of the parallel partition packet network 1. The unit level parallel partition switch 410a is an independent, parallel partition of the unit level switch 208a of FIGs. 2 and 6. As shown in FIG. 4, each of the remaining blocks 200b ... 200n of the unit 210a (FIG. 2) are also coupled to the unit level parallel partition switch 410a of the parallel partition packet network 1 by a parallel partition network connection 350ba ... 350na, respectively, of the parallel partition packet network 1, similar to the network connection 350aa (FIGs. 3, 4) of the parallel partition packet network 1.

Also coupled to the unit level parallel partition switch 410a of the parallel partition packet network 1, is a plurality of shared memories 414a, ... 414n and a parallel partition network connection 420aa of the parallel partition packet network 1. The unit level parallel partition switch 410a may be a cross-bar or matrix switch network, for example. Other types of switch networks may be used to interconnect the components of the unit 210a (FIG. 2), depending upon the particular application. The processors of each block 200a, 200b ... 200n of the unit 210a (FIG. 2) may communicate at the unit level with any of the other blocks 200a, 200b ... 200n and any of the shared memories shared memories 414a, ... 414n of the unit block 200a over the unit level parallel partition switch 410a. Access to the unit level parallel partition switch 410a is granted by control logic 424 which arbitrates conflicting requests for access to the unit level parallel partition switch 410a. Once granted access, a processor of a block 200a, 200b ... 200n of the unit 210a (FIG. 2) may read or write a packet of data from or to, respectively, a processor or memory of a block 200a, 200b ... 200n of the unit 210a (FIG. 2) over the unit level parallel partition switch 410a.

The control logic 424 of the unit level parallel partition switch 410a and the control logic 324 of each block network 320 of each of the blocks 200a, 200b ... 200n of the unit 210a (FIG. 2), cooperate to grant access to the source block network 320 of the packet source, and to the destination block network 320 of the packet destination, and to the intermediate unit level parallel partition switch 410a, such that a packet may be transmitted from its source block to its destination block, via the unit level parallel partition switch 410a, without buffering. Thus, the control logic 424 of the unit level parallel partition switch 410a and the control logic 324 of each block network 320 of each of the blocks 200a, 200b ... 200n of the unit 210a (FIG. 2), cooperate to grant simultaneous access to the source block network 320 of the packet source, and to the destination block network 320 of the packet destination, and to the intermediate unit level parallel partition switch 410a. In another aspects not according to the claimed invention, buffering may be added at the block network 320 level or the unit level parallel partition switch 410a level, or both, depending upon the particular application. Thus, for example, the unit level parallel partition switch 410a or one or more blocks may buffer packets in a local buffer coupled to the unit level parallel partition switch 410a or to one or more block networks 320 of the various blocks 200a, 200b ... 200n of the unit 210a (FIG. 2).

In addition to the unit level parallel partition switch 410a, the unit level switch 208a ( FIGs. 2 and 6) of the unit 210a, also has an independent, parallel partition, unit level switch 410b ... 410n (FIG. 6) for each of the remaining parallel partition packet networks, parallel partition packet network 2 ... parallel partition packet network n, respectively, as shown in FIG. 6. Each unit level parallel partition switch 410b ... 410n is similar to the unit level parallel partition switch 410a described above for the parallel partition packet network 1. Thus, each parallel partition packet network 1, 2, ... n has a unit level parallel partition switch 410a, 410b ... 410n, respectively, at the unit hierarchical level (FIG. 2) which is coupled to the system memory 104 (FIG. 1) and to each block network 320 of each of the plurality of blocks 200a, 200b, ... 200n of the unit 210a.

The unit level switch 208b ( FIGs. 2 and 6) of the unit 210b similarly has an independent, parallel partition, unit level switch 410a, 410b ... 410n (FIG. 6) for each of the parallel partition packet networks, 1, 2, n, respectively. Each unit level parallel partition switch 410a, 410b ... 410n of the unit level switch 208b, is similar to the unit level parallel partition switch 410a of the unit level switch 208a of the unit 210a, described above for the parallel partition packet network 1. Thus, each parallel partition packet network 1, 2, ... n of the unit 210b has a unit level parallel partition switch 410a, 410b ... 410n, respectively, at the unit hierarchical level (FIG. 2) which is coupled to the system memory 104 (FIG. 1) and to each block network 320 of each of the plurality of blocks 202a, 202b, ... 202n of the unit 210b. Each of the remaining units including unit 210n, is constructed in a similar fashion.

The block network 320 (FIG. 3) for block 200a, for example, is shown in FIGs. 3, 6 to be coupled by network connections 350aa, 350ab, 350ac ... 350an, of the parallel partition networks 1, 2, 3 ... n, respectively, to the unit level parallel partition switches 310a, 410b ... 410n (FIG.6) of the unit level switch 208a of the unit 210a. Similarly, the block 200b has a block network similar to the block network 320 (FIG. 3) for block 200a, which is coupled by network connections 350ba, 350bb ... 350bn, (FIG.6) of the parallel partition networks 1, 2, ... n, respectively, to the unit level parallel partition switches 410a, 410b ... 410n (FIG.6) of the unit level switch 208a of the unit 210a . Similarly, the block 200n has a block network similar to the block network 320 (FIG. 3) for block 200a, which is coupled by network connections 350na, 350nb ... 350nn, of the parallel partition networks 1, 2, ... n, respectively, to the unit level parallel partition switches 410a, 410b ... 410n (FIG.6) of the unit level switch 208a of the unit 210a . Similarly, each block of the blocks 202a, 202b, ... 202n, has a block network similar to the block network 320 (FIG. 3) for block 200a, which is coupled by network connections of each of the parallel partition networks 1, 2, ... n, to the unit level parallel partition switches 410a, 410b ... 410n (FIG.6) of the unit level switch 208b of the unit 210b . The blocks and unit level switches of the remaining units, including unit n, are interconnected in a similar fashion.

Referring again to the unit level parallel partition switch 410a for the parallel partition network 1, the parallel partition network connection 420aa of the parallel partition packet network 1, connects the unit level parallel partition switch 410a of the unit 210a (FIG. 2), for example, to the next hierarchical level, which is the unit-to-unit level (FIG. 2) in the illustrated embodiment.

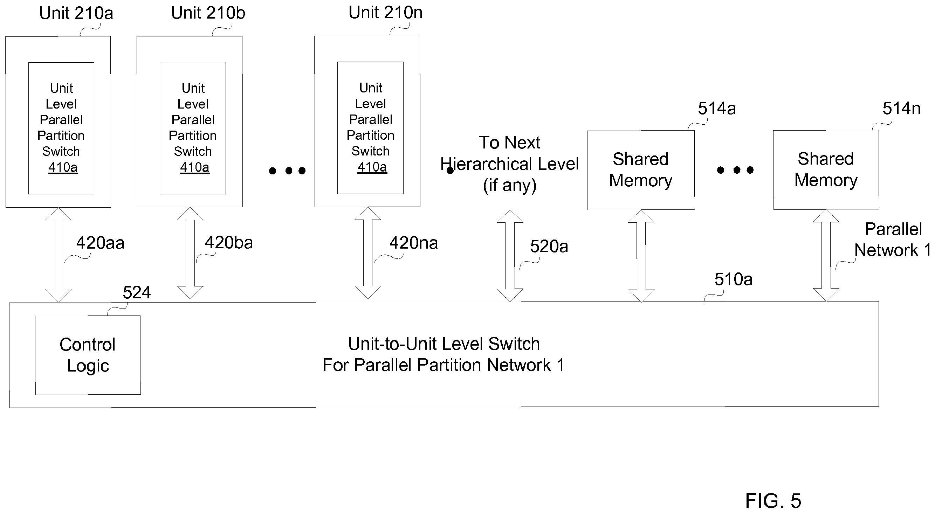

FIG. 5 shows one example of the parallel partition packet network 1 at a unit-to-unit hierarchical level. The unit-to-unit level parallel partition packet network 1 of FIG. 5 is representative of each of the unit-to-unit level parallel partition packet networks 2, 3 ... n.

As shown in FIG. 5, the network connection 420aa (FIGs. 4 , 5) of the parallel partition packet network 1, connects the unit level parallel partition switch 410a of the unit 210a to a unit-to-unit level parallel partition switch 510a of the parallel partition packet network 1. The unit-to-unit level parallel partition switch 510a is an independent, parallel partition of the unit-to-unit level switch 220a of FIG. 2 and 6. As shown in FIG. 5, the unit level parallel partition switch 410a of the parallel partition packet network 1 for each of the remaining units, 210b ... 210n, is also coupled to the unit-to-unit level parallel partition switch 510a of the parallel partition packet network 1 by parallel partition network connections 420ba ... 420na, respectively, of the parallel partition packet network 1 similar to the parallel partition network connection 420aa (FIGs. 4, 5) of the parallel partition packet network 1, for the unit level parallel partition switch 410a of the unit 210a.

A plurality of shared memories 514a, ... 514n and a network connection 520a of the parallel partition packet network 1 to a next hierarchical level (if any), may also be coupled to the unit-to-unit level parallel partition switch 510a of the parallel partition packet network 1. The unit-to-unit level parallel partition switch 510a may be a cross-bar or matrix switch network, for example. Other types of switch networks may be used to interconnect the components connected to the unit-to-unit level parallel partition switch 510a, depending upon the particular application. The processors of each unit 210a, 210b, ... 210n may communicate at the unit-to-unit level with any of the other units 210a, 210b, ... 210n and any of the shared memories shared memories 514a, ... 514n over the unit-to-unit level parallel partition switch 510a of the parallel partition packet network 1.

Access to the unit-to-unit level parallel partition switch 510a is granted by control logic 524 which arbitrates conflicting requests for access to the unit-to-unit level parallel partition switch 510a. Once granted access, a processor of units 210a, 210b, ... 210n may read or write a packet of data from or to, respectively, a processor or memory of units 210a, 210b, ... 210n or unit-to-unit memories 514a, ... 514n, over the unit-to-unit level parallel partition switch 510a of the parallel partition packet network 1.

The unit-to-unit level parallel partition switch 510a may lack a buffer so as to reduce energy expenditure. Accordingly, the control logic 524 of the unit-to-unit level parallel partition switch 510a, the control logic 424 of the unit level parallel partition switch 410a, 410b, ... 410n, respectively, of the unit 210a, and the control logic 324 of each block network 320 of each of the blocks of the units 210a, 210b, ... 210n, cooperate to grant access to the source block network 320, and to the source unit level parallel partition switch 410a of the packet source, and to the intermediate unit-to-unit level parallel partition switch 510a, and to the destination unit level parallel partition switch 410a and to the destination block network 320 of the packet destination such that a packet may be transmitted from its source block to its destination block, via the unit-to-unit level parallel partition switch 510a, and the source and destination unit level parallel partition switches 410a, without buffering.

Thus, the control logic 524 of the unit-to-unit level parallel partition switch 510a, the control logic 424 of each unit level parallel partition switch 410a of each of the units 210a, 210b, ... 210n and the control logic 324 of each block network 320 of each of the blocks of each of the units 210a, 210b, ... 210n, cooperate to grant simultaneous access to a selected block network 320 and a selected unit level parallel partition switch 410a of the packet source, and to a selected block network 320 and a selected unit level parallel partition switch 410a of the packet destination, and to the intermediate unit-to-unit level parallel partition switch 510a, such that a packet may be transmitted from its source block to its destination block, via the unit-to-unit level parallel partition switch 510a, the unit level parallel partition switches 410a and the block networks 320 of the packet's path from source to destination.

Buffering may be added at the block network 320 level or the unit level parallel partition switch 410a level, or the unit-to-unit level parallel partition switch 510a level or in various combinations, depending upon the particular application. Thus, for example, it is appreciated that in some embodiments, the unit-to-unit level parallel partition switch 510a, or one or more units or blocks may buffer packets in a local buffer coupled to the unit-to-unit level parallel partition switch 510a, to the unit level parallel partition switches 410a or to one or more block networks 320 of the various blocks of the units 210a, 210b, ... 210n.

In addition to the unit-to-unit level parallel partition switch 510a, the unit-to-unit level switch 220a ( FIGs. 2 and 6) also has an independent, parallel partition, unit-to-unit level switch 510b ... 510n (FIG. 6) for each of the remaining parallel partition packet networks, parallel partition packet network 2 ... parallel partition packet network n, respectively, as shown in FIG. 6. Each unit-to-unit level parallel partition switch 510b ... 510n is similar to the unit-to-unit level parallel partition switch 510a described above for the parallel partition packet network 1. Thus, each parallel partition packet network 1, 2, ... n has a unit-to-unit level parallel partition switch 510a, 510b ... 510n, respectively, at the unit-to-unit hierarchical level (FIG. 2) which is coupled to a unit level parallel partition switch 410a, 410b, ... 410n, respectively, for a parallel partition packet network 1, 2, ... n, respectively of the unit level switch 208a.

Accordingly, the unit level parallel partition switch 410a (FIG. 4) of the unit level switch 208a of the unit 210a, for the parallel partition packet network 1, is shown in FIGs. 4, 6 to be coupled by a parallel partition network connection 420aa of the parallel partition network 1 to the unit-to-unit level parallel partition switch 510a (FIGs. 5, 6). In a similar manner, the remaining unit level parallel partition switches 410b ... 410n (FIG.6) of the unit level switch 208a of the unit 210a, are coupled by parallel partition network connections 420ab, ... 420an (FIG. 6), respectively, of the parallel partition networks 2, ... n, respectively, to the unit-to-unit level parallel partition switches 510b ... 510n, respectively, of the unit-to-unit level switch 220a. Similarly, each unit level parallel partition switch 410a, 410b ... 410n of the unit level switch 208b of the unit 210b is coupled by parallel partition network connections of each of the parallel partition networks 1, 2, ... n, respectively, to the unit-to-unit level parallel partition switches 510a, 510b ... 510n, respectively, of the unit-to-unit level switch 220a. The remaining unit level parallel partition switches of the remaining unit level switches of the remaining units, including the unit n, are coupled by parallel partition network connections of each of the parallel partition networks 1, 2, ... n, respectively, to the unit-to-unit level parallel partition switches 510a, 510b ... 510n, respectively, of the unit-to-unit level switch 220a.

In this manner, the device 100 comprises a plurality of units 210a, 210b, ... 210n organized to define a unit-to-unit level (FIG. 2) of a third hierarchical level higher than a second hierarchical level which is the unit level in the illustrated embodiment. Each unit 210a, 210b, ... 210n, is individually at the unit hierarchical level (FIG. 2) and comprises a plurality of blocks, such as blocks 200a, 200b, ... 200n, for example, of the unit 210a. Each block is individually at a first hierarchical level which is the block level in the illustrated embodiment. The block level is lower than the unit level in this embodiment.

Each parallel partition packet network 1, 2, ... n has a unit level parallel partition switch such as a unit level parallel partition switch 410a, 410b, ... 410n, respectively, of unit level switch 208a, for example, at the unit hierarchical level for each unit and coupled to the system memory 104 and to each block network 320 of a plurality of blocks of a particular unit. Each parallel partition packet network 1, 2, ... n further has a unit-to-unit level parallel partition switch such as a unit-to-unit level parallel partition switch 510a, 510b, ... 510n, respectively, of unit-to-unit level switch 220a, for example, at the unit-to-unit hierarchical level. Each unit-to-unit level parallel partition switch is coupled to each unit level parallel partition switch of the particular parallel partition packet network at the unit hierarchical level. Parallel partition network control logic switches a packet through the unit-to unit level parallel partition switch of the selected parallel partition packet network at the unit-to-unit hierarchical level, and between selected unit level parallel partition switches of the selected parallel partition packet network.

In addition to routing packets amongst the various blocks of the various units on the die of the microprocessor 102 (FIG. 1), the unit level parallel partition switches also route packets on and off dies of the device 100. For example, referring again to FIG. 4, the unit level parallel partition switch 410a of the parallel partition packet network 1 is coupled by a parallel partition network connection of the parallel partition packet network 1 to an output buffer 460a for temporarily storing outbound packets having a destination off the die of the microprocessor 102. The output buffer 460a is coupled by another parallel partition network connection of the parallel partition packet network 1 to a die-to-die parallel partition output channel 470a (of the parallel partition packet network 1), which in the claimed embodiment, is coupled to a die of the memory controller 106.

The unit level parallel partition switch 410a of the parallel partition packet network 1 is also coupled by a parallel partition network connection of the parallel partition packet network 1 to an input buffer 460b for temporarily storing inbound packets having a destination on the microprocessor die 102. The input buffer 460b is coupled by another parallel partition network connection of the parallel partition packet network 1 to a die-to-die input channel 470b (of the parallel partition packet network 1), which in the claimed embodiment, is coupled to a die of the memory controller 106.

In the illustrated embodiment of the device 100, each unit 210a, 210b, ... 210n has an associated memory controller 106a, 106b, ... 106n (FIG. 6) of the memory controller 106 (FIG. 1). For example, the device 100 may have with 8 blocks in a unit, 4 units in the die of the processor 102, and 1 memory controller per unit. It is appreciated that the number of processors, shared memories, blocks, units, unit-tounits, memory controllers, dies, etc., may vary, depending upon the particular application.

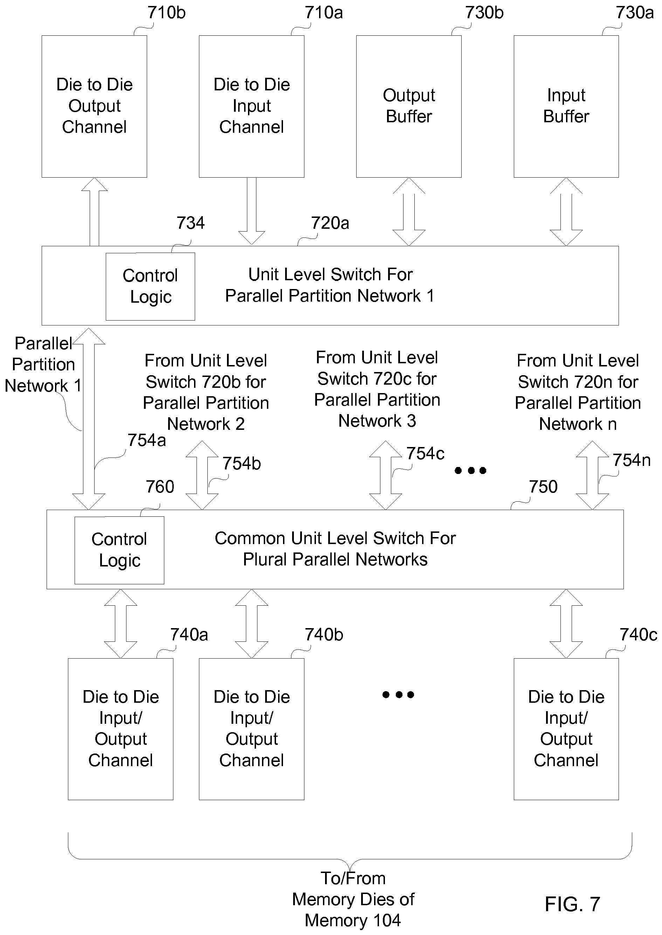

In the claimed embodiment, the die-to-die channels 470a, 470b of the unit level parallel partition switch 410a of the die of the processors 102, and the die-to-die channels 710a, 710b (FIG. 7) of the die of the memory controller 106a (FIG. 6), are included in die-to-die communication channels 640a (FIG. 6) of the parallel partition packet network 1, coupling the die of the processors 102 (FIG. 1) to the die of the memory controller 106a of the memory controller 106 (FIG. 1). Each of the remaining unit level parallel partition switches 410b ... 410n of the unit level switch 208a, of the unit 210a, for the parallel partition packet networks 2 ... n, respectively, is similarly coupled to the die of the memory controller 106a by die-to-die communication channels 640b, 640n, respectively, (FIG. 6). Similarly, each of the remaining parallel partition packet networks 2 ... n, has associated shared memories, input and output buffers, and die-to-die channels similar to the shared memories 414a ... 414n, input and output buffers 460a, 460b, and die-to-die channels 470a, 470b described for the unit level parallel partition switch 410a of the parallel partition packet network 1, for the associated unit level parallel partition switches 410b ... 410n of the parallel partition packet networks 2 ... n, respectively.

Similarly, each unit level parallel partition switch 410a, 410b ... 410n of the unit level switch 208b of the unit 210b is coupled by parallel partition network connections of each of the parallel partition networks 1, 2, ... n, respectively, to the unit-to-unit level parallel partition switches 510a, 510b ... 510n, respectively, of the unit-to-unit level switch 220a. The remaining unit level parallel partition switches of the remaining unit level switches of the remaining units, including the unit n, are coupled by parallel partition network connections of each of the parallel partition networks 1, 2, ... n, respectively, to the unit-to-unit level parallel partition switches 510a, 510b ... 510n, respectively, of the unit-to-unit level switch 220a.

FIG. 7 shows one example of the parallel partition packet network 1 at a unit level for the memory controller 106a, for example. The unit level parallel partition packet network 1 for the memory controller 106a is representative of the each of the unit level parallel partition packet networks 2, 3 ... n of the memory controller 106a. The unit level parallel partition packet networks 1, 2, ... n, of the memory controller 106a are representative of the unit level parallel partition packet networks 1, 2, ... n, of the memory controller 106b, and the unit level parallel partition packet networks 1, 2, ... n of the remaining memory controllers including memory controller 106n.

Referring to FIG. 7, incoming packets on the parallel partition packet network 1 from the output channel buffer 460a (FIG. 4) of the die of the microprocessor 102 (FIG. 1), input by the die of the memory controller 106a, are received through the die-to-die input channel 710a of the die-to-die channel 640a (FIG. 6) and are routed through a unit level parallel partition switch 720a of the parallel partition packet networks 1 to an input buffer 730a to be temporarily stored until transferred off die to the memory 104 (FIG. 1) on another die. Similarly, outgoing packets to be output on the parallel partition packet network 1 by the die of the memory controller 106a, are routed through the unit level parallel partition switch 720a to be temporarily stored in an output buffer 730b. The packets of the output buffer 730b are routed through the unit level parallel partition switch 720a to be transferred off die to the die of the microprocessor 102 (FIG. 1) through the die-to-die output channel 710b of the die-to-die channel 640a (FIG. 6) and the die-to-die input channel 470b (FIG. 4) of the die-to-die channel 640a (FIG. 6) to the input channel buffer 460b (FIG. 4).

The unit level parallel partition switch 720a may be a cross-bar or matrix switch network, for example. Other types of switch networks may be used to interconnect the components of the parallel partition packet network 1 at the unit level for the memory controller 106a, depending upon the particular application.

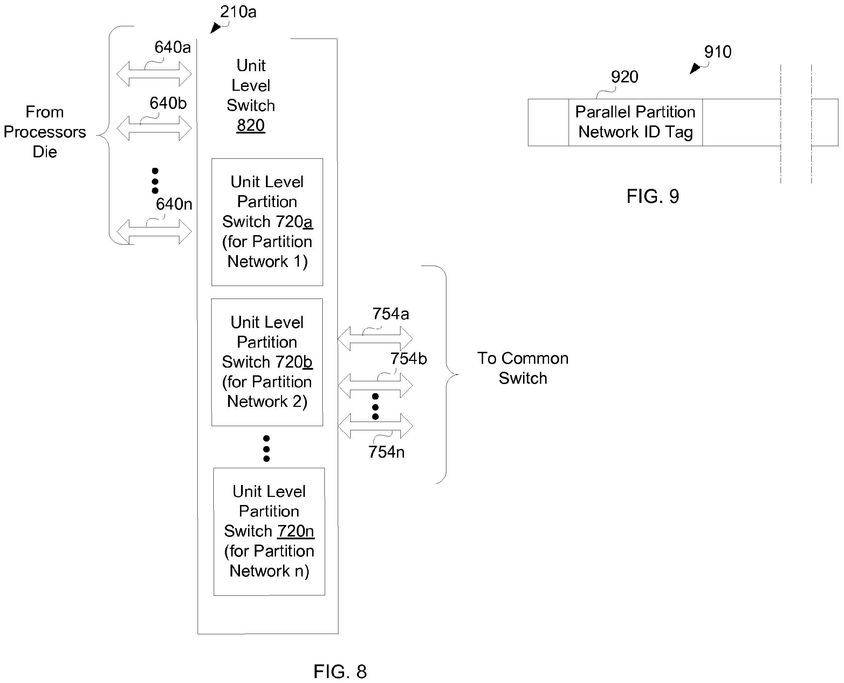

The unit level parallel partition switch 720a is a partition of a unit level switch 820 (FIG. 8) for the parallel partition packet network 1. In addition to the unit level parallel partition switch 720a, the unit level switch 820 also has an independent, parallel partition, unit level switch 720b ... 720n for each of the remaining parallel partition packet networks, parallel partition packet network 2 ... parallel partition packet network n, respectively, as shown in FIG. 8. In addition to a unit level parallel partition switch 720b ... 720n, each of the remaining parallel partition packet networks 2 ... n, has die-to-die channels similar to the die-to-die channels 710a, 710b, and input and output buffers similar to the input and output buffers 730a, 730b, coupled to the unit level parallel partition switch of the particular parallel partition packet network 2 ... n.

Access to the unit level parallel partition switch 720a is granted by control logic 734 (FIG. 7) which arbitrates conflicting requests for access to the unit level parallel partition switch 720a. Once granted access, the memory controller 106a may read or write a packet of data from or to, respectively, the die-to-die input and output channels 710a, 710b and the input and output buffers 730a, 730b over the unit level parallel partition switch 720a of the parallel partition packet network 1.

In the illustrated embodiment, the unit level parallel partition switch 720a has buffers 730a, 730b and 460a, 460b (FIG. 4) for die to die packet transfers. Hence, the parallel partition packet network control logic of the control logic 734 (FIG. 7) for the unit level parallel partition switch 720a may operate more independently of the parallel partition packet network control logic of the control logics 324 (FIG. 3), 424 (FIG. 4), and 524 (FIG. 5) for the parallel partition packet network 1. In an example not covered by the claims, buffering may be omitted for the unit level parallel partition switch 720a, depending upon the particular application.

The memory controller 106a further has a plurality of common die-to-die communication channels 740a, 740b ... 740n, each of which is adapted for carrying packets from each of the plurality of parallel partition packet networks 1, 2, ... n. In the illustrated embodiment, each packet (as represented by the packet 910 of FIG. 9) carried by a common communication channel 740a, 740b ... 740n (FIG. 7) has a parallel partition packet network identification tag 920 (FIG. 9) identifying the particular parallel partition packet network, such as parallel partition packet network 1, for example, of the parallel partition packet networks 1, 2, ... n, which carried the packet to the memory controller 106a.

The memory controller 106a further has a common unit level switch 750 coupled to each parallel partition packet networks 1, 2, ... n. Thus, the unit level parallel partition switch 720a of the parallel partition packet network 1 is shown connected by parallel partition network connection 754a to the common unit level switch 750 for the parallel partition packet networks 1, 2, ... n. In a similar manner, the remaining unit level parallel partition switch 720b ... 720n (FIG. 8) are shown connected by parallel partition network connections 754b ... 754n, respectively, to the common unit level switch 750 for the parallel partition packet networks 1, 2, ... n.

Access to the common unit level switch 750 is granted by control logic 760 which arbitrates conflicting requests for access to the common unit level switch 750. Once granted access, the memory controller 106a may read or write a packet of data from or to, respectively, the die-to-die input/output channels 740a, 740b, ... 740n and the input and output buffers 730a, 730b of parallel partition packet network 1, over the common unit level switch 750 and the unit level parallel partition switch 720a of parallel partition packet network 1. In a similar manner, once granted access, the memory controller 106a may read or write a packet of data from or to, respectively, the die-to-die input/output channels 740a, 740b ... 740n and the input and output buffers of the associated parallel partition packet network 2 ... n, over the common unit level switch 750 and the associated unit level parallel partition switch 720b ... 720n of the parallel partition packet networks 2, 3 ... n, respectively.

The common unit level switch 750 may be a cross-bar or matrix switch network, for example. Other types of switch networks may be used to interconnect the components of coupled to the common unit level switch 750 for the memory controller 106a, depending upon the particular application.

The parallel partition packet network control logic of the control logic 760 of the common unit level switch 750 multiplexes the packets from each of the parallel partition packet network 1, 2, 3 ... n onto a selected common die-to-die communication channels 740a, 740b ... 740n, for carrying packets from each of the plurality of parallel partition packet networks 1, 2, ... n. The parallel partition packet network control logic of the control logic 760 of the common unit level switch 750, is further adapted to tag a packet from each parallel partition packet network 1, 2, 3 ... n with a tag 920 (FIG. 9) to identify the particular parallel partition packet network 1, 2, 3 ... n from which the packet 910 arrived, and switch the tagged packet through the common unit level 750 switch (multiplex) to one of the die-to-die input/output communication channels 740a, 740b ... 740n. The tag 920 may be placed in the header or other suitable portion of the packet, depending upon the particular application. Thus, a parallel partition network identification may be added to packets at die boundaries before transmitting the packet off the die.

The die-to-die input/output communication channels 740a, 740b ... 740n may be, in examples not convered by the claims, each connected to a die containing a memory region of the system memory 104 (FIG. 1). The memory 104 may have a hybrid cube or dynamic random access memory (DRAM) stack form. However, it is appreciated that other memory types may be utilized, depending upon the particular application. It is further appreciated that the common unit level 750 switch and the die-to-die input/output communication channels 740a, 740b ... 740n, may be coupled to other types of dies for other functions such as input/output controllers, storage, etc., depending upon the particular application.

The parallel partition packet network control logic of the control logic 760 of the common unit level switch 750, may be adapted to read a tag 920 (FIG. 9) of a packet 910 received from one of the die-to-die input/output communication channels 740a, 740b ... 740n, and to switch the packet 910 through the common unit level switch 750 to the particular parallel partition packet network 1, 2, ... n identified by the tag 920 of the packet 910. The parallel partition packet network control logic of the control logic 760 of the common unit level switch 750, may after reading the tag, strip the tag 920 (FIG. 9) from the packet 910 received from one of the die-to-die input/output communication channels 740a, 740b ... 740n, prior to forwarding the packet to the particular parallel partition packet network 1, 2, ... n identified by the tag 920 stripped from the packet 910. In other examples not covered by the claims, the parallel partition packet network control logic of the control logic 760 may preserve the tag 920 (FIG. 9) read from the packet 910 received from one of the die-to-die input/output communication channels 740a, 740b ... 740n. In this manner, the packet may be forwarded to the particular parallel partition packet network 1, 2, ... n identified by the tag 920 of the packet 910, with the tag 920 still on board the packet.

In the illustrated embodiment, the parallel partition packet network control logic of the control logic 760 (FIG. 7) of the common unit level switch 750, cooperates with the parallel partition packet network control logic of the control logic 734 (FIG. 7) for the unit level parallel partition switch 720a, 720b, ... 720n of parallel partition packet network 1, 2, ... n, respectively, in granting access to the unit level switches 720a, 720b, ... 720n and the common unit level switch 750. In this manner, packets may be transferred between the die-to-die input/output communication channels 740a, 740b ... 740n, and the input and output buffers of the memory controller 106a of each parallel partition packet network 1, 2, ... n, such as the input and output buffers 730a, 730b for the parallel partition packet network 1, for example, without additional buffering. In another example not covered by the claims, buffering may be added for the common unit level switch 750 and the unit level parallel partition switches 720a, 720b, ... 720n, depending upon the particular application.

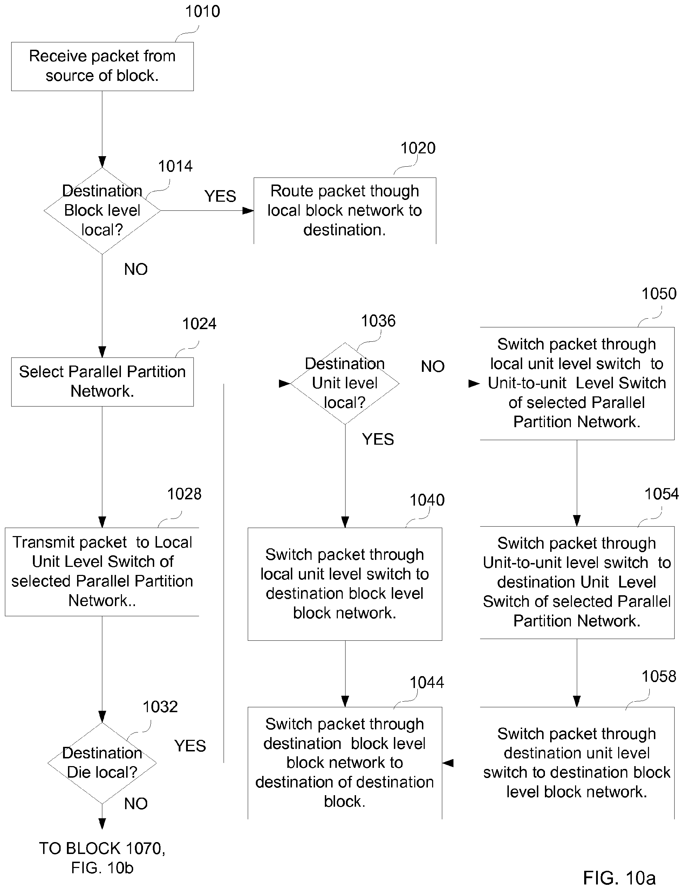

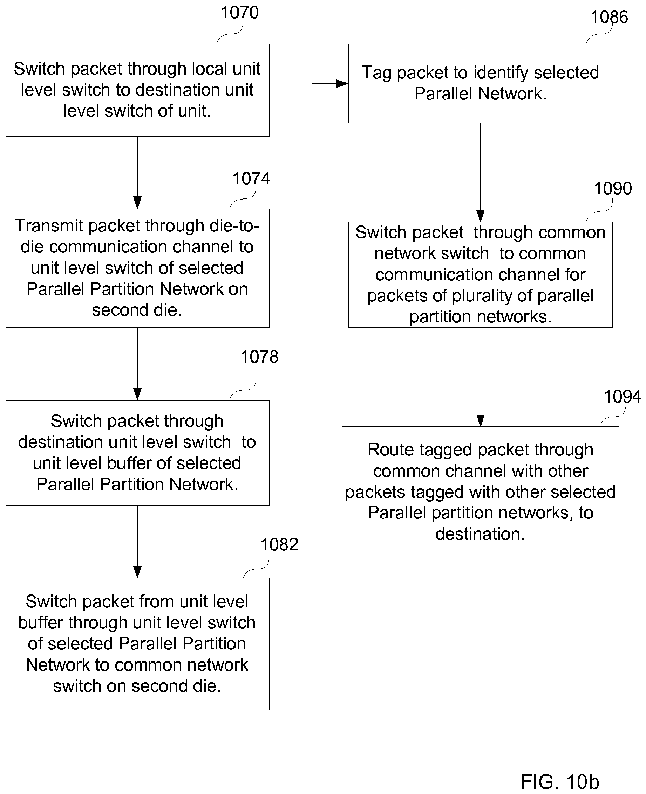

FIGs. 10a, 10b show one example of operations of network control logic in accordance with the claimed embodiment of the present description in connection with parallel partition packet network 1 and unit 210a. The operations of network control logic in connection with parallel partition packet network 1, unit 210a, and memory controller 106a, are representative of operations of network control logic in connection with each of the other parallel partition packet networks 2, 3 ... n, the other units 210b ... 210n, and the other memory controllers 106b ... 106n.

In a first operation, a packet is received (block 1010) for transmission through the network from a source such as a processor 310a (FIG. 3), for example, of a source block 200a, for example. If the destination of the packet is determined (block 1014) to be local at the block level, that is in the same block as the source block, the packet is routed (block 1020) through the local block network, such as the block network 320 of the block 200a, for example, to the destination within the block 200a.

However, if the destination of the packet is determined (block 1014) to be other than block level local, parallel partition packet network control logic selects (block 1024) a parallel partition packet network, such as the parallel partition network 1, for example, of a plurality of parallel partition packet networks, 1, 2, ... n. The particular parallel partition packet network may be selected as a function of the identity of the source or the identity of the destination, or both , of the packet. Hence, processors and shared memories may be assigned to particular parallel partition packet networks, 1, 2, ... n. In one embodiment, the assignments may be fixed. In other embodiments, the assignments may change as a function of various factors. For example, if the traffic on a particular parallel partition packet networks, 1, 2, ... n should become too heavy relative to that on other parallel partition packet networks, 1, 2, ... n, the assignments may be changed to distribute the traffic on the parallel partition packet networks, 1, 2, ... n more evenly. Assignments of packet sources and/or packet destinations to the parallel partition packet networks, 1, 2, ... n may be a function of other factors, depending upon the particular application.

The parallel partition packet network control logic transmits (block 1028) the packet through the selected parallel partition packet network independently of the other parallel partition packet networks, to the local unit level switch, such as the unit level switch 410a, of the selected parallel partition packet network 1, of the unit 210a, for example, at the next higher hierarchical level, that is, the unit hierarchical level (FIG. 2).

If the destination of the packet is determined (block 1032) to be die local, that is, on the same die as the source of the packet, and if the destination of the packet is determined (block 1036) to be unit level local, that is, within the same unit, such as the unit 210a, for example, as the source of the packet, the parallel partition packet network control logic switches (block 1040) the packet through the local unit level switch (switch 410a in this example) of the selected parallel partition packet network (parallel partition packet network 1 in this example) at the unit hierarchical level. The packet is switched to the block network of the packet destination, such as the block network 230 of the block 200b, for example, of the local unit 210a. The control logic of the block network 230 of the destination block (block 200b in this example of the unit 210a) switches (block 1044) the packet through the block network of the destination block (block 200b in this example) to the destination within the destination block.

If the destination of the packet is determined (block 1032) to be die local, that is, on the same die as the source of the packet, but if the destination of the packet is determined (block 1036) not to be unit level local, that is, not within the same unit, such as the unit 210a, for example, as the source of the packet, the parallel partition packet network control logic switches (block 1050) the packet through the local unit level switch (switch 410a in this example) of the selected parallel partition packet network (parallel partition packet network 1 in this example) at the unit hierarchical level, to the unit-to-unit switch of the of the selected parallel partition packet network (parallel partition packet network 1 in this example) at the unit-to-unit hierarchical level. Thus, the packet may be switched (block 1050) to the unit-to-unit switch 510a (FIG. 5), for example, of the parallel partition packet network 1 in this example. The unit-to-unit switch 510a is between selected unit level switches, such as the source unit level switch 410a of the unit 210a, for example, and a destination unit level switch 410a of the unit 210b, for example, of the selected parallel partition packet network, which is the parallel partition packet network 1 in this example.

The parallel partition packet network control logic in turn switches (block 1054) the packet through the unit-to-unit switch (unit-to-unit switch 510a (FIG. 5), for example) at a unit-to-unit hierarchical level of the of the selected parallel partition packet network (parallel partition packet network 1 in this example), to the destination unit level switch (such as unit level switch 410a, for example, of the unit 210b, for example) of the selected parallel partition packet network (parallel partition packet network 1 in this example).

The parallel partition packet network control logic switches (block 1058) the packet through the destination unit level switch (switch 410a in this example) of the selected parallel partition packet network (parallel partition packet network 1 in this example) at the unit hierarchical level. The packet is switched to the block network of the packet destination, such as the block network of the block 202a (FIG. 6), for example, of the destination unit 210b. The control logic of the block network of the destination block (block 202a in this example of the unit 210b) switches (block 1044) the packet through the block network of the destination block (block 202a in this example) to the destination within the destination block.

If the destination of the packet is determined (block 1032) to be not die local, that is, not on the same die as the source of the packet, the parallel partition packet network control logic switches (block 1070, FIG. 10b) the packet through the local unit level switch (switch 410a of unit 210a, in this example) of the selected parallel partition packet network (parallel partition packet network 1 in this example) at the unit hierarchical level, through the die-to-die communication channels (block 1074), such as the die-to-die communication channels 640a (FIG. 6) of the selected parallel partition packet network (parallel partition packet network 1 in this example), to the destination unit level switch of the another die. In the illustrated embodiment, the other die is the die of the memory controller 106a of the unit 210a, which includes the unit level switch 720a of the selected parallel partition packet network (parallel partition packet network 1 in this example) of memory controller 106a.

The parallel partition packet network control logic switches (block 1078) the packet through the memory controller unit level switch (the unit level switch 720a of the memory controller 106a for the selected parallel partition packet network 1 in this example) and buffers the packet in the buffer of the selected parallel partition packet network (parallel partition packet network 1 in this example), such as input buffer 730a, for example.

In this example, the ultimate destination of the packet is a memory region of the system memory 104 located on yet another die. Accordingly, the parallel partition packet network control logic switches (block 10782) the packet through the memory controller unit level switch (the unit level switch 720a of the memory controller 106a for the selected parallel partition packet network 1 in this example) to a common unit level switch such as the common unit level switch 750, for example, for switching packets from or to each parallel partition packet network of the plurality of parallel partition packet networks 1, 2, ... n.

The parallel partition packet network control logic tags (block 1086) the packet arriving from the selected parallel partition packet network (parallel partition packet network 1 in this example) with a tag 920 to identify the selected parallel partition packet network (parallel partition packet network 1 in this example) from which the packet arrived. The parallel partition packet network control logic switches (block 1090) the tagged packet through a common unit level switch to a common communication channel for carrying packets of each of the plurality of parallel partition packet networks 1, 2, ... n. The parallel partition packet network control logic routes (block 1094) the tagged packets through the common communication channel to the ultimate destination such as a memory region on another die. For tagged packets arriving on a common communication channel, the parallel partition packet network control logic reads the tag of the packet arrived from the common communication channel, and switches the arrived packet through the common unit level switch to the particular parallel partition packet network identified by the tag of the packet.

The described operations may be implemented as a method, apparatus or computer program product using standard programming and/or engineering techniques to produce software, firmware, hardware, or any combination thereof. The described operations may be implemented as computer program code maintained in a "computer readable storage medium", where a processor may read and execute the code from the computer storage readable medium. The computer readable storage medium includes at least one of electronic circuitry, storage materials, inorganic materials, organic materials, biological materials, a casing, a housing, a coating, and hardware. A computer readable storage medium may comprise, but is not limited to, a magnetic storage medium (e.g., hard disk drives, floppy disks, tape, etc.), optical storage (CD- ROMs, DVDs, optical disks, etc.), volatile and nonvolatile memory devices (e.g., EEPROMs, ROMs, PROMs, RAMs, DRAMs, SRAMs, Flash Memory, firmware, programmable logic, etc.), Solid State Devices (SSD), etc. The code implementing the described operations may further be implemented in hardware logic implemented in a hardware device (e.g., an integrated circuit chip, Programmable Gate Array (PGA), Application Specific Integrated Circuit (ASIC), etc.). Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The program code embedded on a computer readable storage medium may be transmitted as transmission signals from a transmitting station or computer to a receiving station or computer. A computer readable storage medium is not comprised solely of transmissions signals. Those skilled in the art will recognize that many modifications may be made to this configuration without departing from the scope of the present description, and that the article of manufacture may comprise suitable information bearing medium known in the art. Of course, those skilled in the art will recognize that many modifications may be made to this configuration without departing from the scope of the present description, and that the article of manufacture may comprise any tangible information bearing medium known in the art.

In certain applications, a device in accordance with the present description, may be embodied in a computer system including a video controller to render information to display on a monitor or other display coupled to the computer system, a device driver and a network controller, such as a computer system comprising a desktop, workstation, server, mainframe, laptop, handheld computer, etc. Alternatively, the device embodiments may be embodied in a computing device that does not include, for example, a video controller, such as a switch, router, etc., or does not include a network controller, for example.

The illustrated logic of figures may show certain events occurring in a certain order. In alternative embodiments, certain operations may be performed in a different order, modified or removed. Moreover, operations may be added to the above described logic and still conform to the described embodiments. Further, operations described herein may occur sequentially or certain operations may be processed in parallel. Yet further, operations may be performed by a single processing unit or by distributed processing units.

The foregoing description of various embodiments has been presented for the purposes of illustration and description. It is not intended to be exhaustive or to limit to the precise form disclosed. Many modifications and variations are possible in light of the above teaching.

## Claims

1. A computer device for use with a memory (104), comprising:
a plurality of blocks (200a-n) defining a block hierarchical level, each block including a plurality of processors (310a-n) and a block network (320) interconnecting the processors (310a-n) of the block;
a unit level switch (208a) interconnecting a plurality of said blocks (200a-n) to form a unit (210a), the unit level switch (208a) being partitioned into a plurality of unit level parallel partition switches (410a-n), each unit level parallel partition switch being independent of the other unit level parallel partition switches (410a-n), the unit defining a unit of a unit hierarchical level higher than the block hierarchical level; and
a hierarchical network partitioned into a plurality of parallel partition packet networks, each parallel partition packet network being independent of the other parallel partition packet networks, each parallel partition packet network having a unit level parallel partition switch of the plurality of unit level parallel partition switches (410a-n) at the unit hierarchical level coupled to each block network (320) of the plurality of blocks of the unit;
a first processor (310a) of a first block (200a) of the plurality of blocks (200a-n) configured to transmit or receive data packets over a first parallel partition packet network selected from the plurality of parallel partition packet networks, and a second processor (310b) of the first block (200a) of the plurality of blocks (200a-n) configured to transmit or receive data packets over a second parallel partition packet network selected from the plurality of parallel partition packet networks, the second parallel partition packet network being independent from the first parallel partition packet network, wherein the first processor and the second processor are assigned respective priorities to transmit or receive the data packets over the first parallel partition packet network and the second parallel partition packet network respectively;
parallel partition packet network control logic adapted to select the first parallel partition packet network or the second parallel partition packet network from the plurality of parallel partition packet networks, and to transmit or receive a data packet through the selected first parallel partition packet network or the second parallel partition packet network independent of the other parallel partition packet networks, said transmitting including switching the data packet through the unit level parallel partition switch of the selected parallel partition packet network at the unit hierarchical level; and
a first die, a second die and a plurality of die-to-die communication channels, each parallel partition packet network having a die-to-die communication channel of the plurality of die-to-die communication channels, coupled to the first and second dies, wherein the unit of the plurality of blocks and the unit level parallel partition switches of the plurality of parallel partition packet networks are on the first die, the device further comprising a plurality of buffers on the first die, each parallel partition packet network having a buffer coupled to the unit level parallel partition switch and the die-to-die communication channel of the particular parallel partition packet network, wherein the parallel partition packet network control logic is further adapted to buffer a data packet in the buffer of the selected parallel partition packet network before transmitting the data packet to the die-to-die communication channel of the selected parallel partition packet network, and to buffer a data packet in the buffer received from the die-to-die communication channel of the selected parallel partition packet network in the buffer of the selected parallel partition packet network;
**characterised in that**:
a plurality of unit hierarchical level memory controllers on the second die, each unit level memory controller adapted to control memory transactions between the memory and the processors of an associated unit, a unit level switch partitioned into a plurality of unit level parallel partition switches on the second die, wherein each parallel partition packet network is associated with a unit level parallel partition switch of the plurality of unit level parallel partition switches on the second die, and a buffer of the plurality of buffers on the second die, each unit level parallel partition switch on the second die coupled to the unit parallel partition level switch and buffer of the particular parallel partition packet network on the first die,
wherein each memory controller has parallel partition packet network control logic on the second die adapted to switch a data packet through the unit level parallel partition switch of the selected parallel partition packet network on the second die, to buffer a data packet in the buffer of the selected parallel partition packet network on the second die before transmitting the data packet to the die-to-die communication channel of the selected parallel partition packet network, and to buffer a data packet in the buffer on the second die received from the die-to-die communication channel of the selected parallel partition packet network on the second die.

2. The device of claim 1, further comprising: a plurality of said units defining a unit-to-unit hierarchical level higher than the unit hierarchical level, wherein each unit is at the unit hierarchical level and comprises a plurality of said blocks at the block hierarchical level, wherein each parallel partition packet network has a unit level parallel partition switch at the unit hierarchical level for each unit and is coupled to each block network of the plurality of blocks of the particular unit, and a unit-to-unit level switch (220a) at the unit-to-unit hierarchical level and is coupled to each unit level parallel partition switch of the particular parallel partition packet network at the unit hierarchical level, wherein the parallel partition packet network control logic is further adapted to switch the data packet through the unit-to unit level switch of the selected parallel partition packet network at the unit-to-unit hierarchical level, between selected unit parallel partition level switches of the selected parallel partition packet network.

3. The device of any of claims 1 to 2, further comprising: a common communication channel for carrying data packets from each of the plurality of parallel partition packet networks wherein each data packet carried by the common communication channel has a tag identifying a parallel partition packet network, and a common unit level switch coupled to each parallel partition packet network of the plurality of parallel partition packet networks, wherein the parallel partition packet network control logic is adapted to tag a data packet from each parallel partition packet network with a tag to identify the parallel partition packet network from which the packet arrived, and switch the tagged data packet through the common unit level switch to the common communication channel.

4. The device of claim 3, wherein the parallel partition packet network control logic is adapted read a tag of a data packet from the common communication channel, and to switch the data packet through the common unit level switch to the parallel partition packet network identified by the tag of the data packet.

5. A method of routing data packets in at least one integrated circuit, comprising:
selecting (1024), by a parallel partition packet network control logic, a first and a second parallel partition packet network from a plurality of parallel partition packet networks partitioned from a hierarchical network, coupling a memory of a device to a plurality of blocks defining a block hierarchical level, each block including a plurality of processors and a block network interconnecting the processors of the block, wherein a plurality of said blocks is organized in at least one unit defining a unit hierarchical level higher than the first hierarchical level, each parallel partition packet network having a unit level parallel partition switch at the unit hierarchical level coupled to the memory and to each block network of the plurality of blocks of the unit, wherein each unit level parallel partition switch is partitioned from a unit level switch interconnecting the plurality of blocks of the unit, each unit level parallel partition switch being independent of the other unit level parallel partition switches;
transmitting (1028), by the parallel partition packet network control logic, a data packet of a first processor of a first block of the plurality of blocks through the selected first parallel partition packet network independent of the other parallel partition packet networks;
transmitting (1028), by the parallel partition packet network control logic, a data packet of a second processor of the first block through the selected second parallel partition packet network independent of the other parallel partition packet networks;
wherein said transmitting includes switching (1040) the data packet through a unit level parallel partition switch of the selected parallel partition packet network at the unit hierarchical level;
configuring the first processor to transmit or receive data packets over the selected first parallel partition packet network, and the second processor to transmit or receive data packets over the selected second parallel partition packet network, the second parallel partition packet network being independent from the first parallel partition packet network, wherein the first processor and the second processor are assigned respective priorities to transmit or receive the data packets over the first parallel partition packet network and the second parallel partition packet network respectively; and
buffering, by the parallel partition packet network control logic, on a first die, a data packet in a buffer of the selected parallel partition packet network, each parallel partition packet network having a buffer and a die-to-die communication channel at the unit hierarchical level, each buffer of a parallel partition packet network being coupled to the die-to-die communication channel and the unit parallel partition level switch of the particular parallel partition packet network, the method further comprising parallel partition packet network control logic transmitting a data packet from a buffer to a die-to-die communication channel of the selected parallel partition packet network, receiving a data packet from the die-to-die communication channel of the selected parallel partition packet network, and buffering the received data packet in the buffer of the selected parallel partition packet network;
**characterised in that**:
controlling, by a unit level memory controller of a plurality of unit hierarchical level memory controllers on a second die, memory transactions between a memory and the processors of an associated unit, each unit having an associated memory controller of the plurality of unit level memory controllers on the second die;
switching, by parallel partition packet network control logic on the second die, a data packet received from the die-to-die communication channel of the selected parallel partition packet network, through a unit level parallel partition switch of the selected parallel partition packet network on the second die, each parallel partition packet network having a unit level parallel partition switch of a plurality of unit level parallel partition switches on the second die; and
buffering, by parallel partition packet network control logic on the second die, a data packet received from the die-to-die communication channel of the selected parallel partition packet network in a buffer of the selected parallel partition packet network, each parallel partition packet network having a buffer of a plurality of buffers on the second die, coupled to the unit level parallel partition switch of the particular parallel partition packet network, each unit level parallel partition switch on the second die being coupled to the die-to-die communication channel of the particular parallel partition packet network; and
switching, by the parallel partition packet network control logic on the second die, a data packet through a unit level parallel partition switch of the selected parallel partition packet network on the second die, buffering a data packet in the buffer of the selected parallel partition packet network on the second die, and transmitting a data packet from the buffer of the selected parallel partition packet network to the die-to-die communication channel of the selected parallel partition packet network.

6. The method of claim 5, further comprising:
switching, by the parallel partition packet network control logic, the data packet through a unit-to-unit level switch of the selected parallel partition packet network at a unit-to-unit hierarchical level, between selected unit level parallel partition switches of the selected parallel partition packet network,
wherein a plurality of said units define the unit-to-unit level of a third hierarchical level higher than the second hierarchical level, wherein each unit is at the unit hierarchical level and comprises a plurality of said blocks at the block hierarchical level, wherein each parallel partition packet network has a unit level parallel partition switch at the unit hierarchical level for each unit and coupled to the memory and to each block network of the plurality of blocks of the particular unit, and a unit-to-unit level switch at the unit-to-unit hierarchical level and coupled to each unit parallel partition level switch of the particular parallel partition packet network at the unit hierarchical level.

7. The method of claim 5, further comprising: tagging, by parallel partition packet network control logic, a data packet arriving from the selected parallel partition packet network with a tag to identify the selected parallel partition packet network from which the data packet arrived, and switching the tagged data packet through a common unit level switch to a common communication channel coupled to each parallel partition packet network of the plurality of parallel partition packet networks, for carrying data packets from each of the plurality of parallel partition packet networks wherein each data packet carried by the common communication channel has a tag identifying a parallel partition packet network from which the tagged data packet arrived.

8. A non-transitory computer readable medium, comprising: executable-instructions, which when executed by a processor arranged on an integrated circuit within the device defined in claim 1, cause the processor to perform the method of any of claims 5 to 7.

## Patentansprüche

1. Computervorrichtung zur Verwendung mit einem Speicher (104), umfassend:
eine Mehrzahl von Blöcken (200a-n) die eine Blockhierarchieebene definieren, wobei jeder Block eine Mehrzahl von Prozessoren (310a-n) und ein Blocknetzwerk (320) umfasst, das die Prozessoren (310a-n) des Blocks miteinander verbindet;
einen Einheitenebenen-Schalter (208a), der eine Mehrzahl der Blöcke (200a-n) miteinander verbindet, um eine Einheit (210a) zu bilden, wobei der Einheitenebenen-Schalter (208a) in eine Mehrzahl von parallelen Einheitenebenen-Partitionsschaltern (410a-n) partitioniert ist, jeder parallele Einheitenebenen-Partitionsschalter von den anderen parallelen Einheitenebenen-Partitionsschaltern (410a-n) unabhängig ist, und die Einheit eine Einheit einer Einheitenhierarchieebene definiert, die höher als die Blockhierarchieebene ist; und
ein hierarchisches Netzwerk, das in eine Mehrzahl von parallelen Partitionspaketnetzwerken partitioniert ist, wobei jedes parallele Partitionspaketnetzwerk von den anderen parallelen Partitionspaketnetzwerken unabhängig ist, jedes parallele Partitionspaketnetzwerk einen parallelen Einheitenebenen-Partitionsschalter der Mehrzahl von parallelen Einheitenebenen-Partitionsschaltern (410a-n) auf der Einheitenhierarchieebene aufweist, (320) die mit der Mehrzahl von Blöcken der Einheit gekoppelt ist;
einen ersten Prozessor (310a) eines ersten Blocks (200a) der Mehrzahl von Blöcken (200a-n), der zum Senden oder Empfangen von Datenpaketen über ein aus der Mehrzahl von parallelen Partitionspaketnetzwerken ausgewähltes erstes paralleles Partitionspaketnetzwerk konfiguriert ist, und einen zweiten Prozessor (310b) des ersten Blocks (200a) der Mehrzahl von Blöcken (200a-n), der zum Senden oder Empfangen von Datenpaketen über ein aus der Mehrzahl von parallelen Partitionspaketnetzwerken ausgewähltes zweites paralleles Partitionspaketnetzwerk konfiguriert ist, wobei das zweite parallele Partitionspaketnetzwerk vom ersten parallelen Partitionspaketnetzwerk unabhängig ist, wobei dem ersten Prozessor und dem zweiten Prozessor jeweilige Prioritäten zum Senden oder Empfangen der Datenpakete über das erste parallele Partitionspaketnetzwerk bzw. das zweite parallele Partitionspaketnetzwerk zugewiesen sind;
Logik zur Steuerung paralleler Partitionspaketnetzwerke, die zum Auswählen des ersten parallelen Partitionspaketnetzwerks oder des zweiten parallelen Partitionspaketnetzwerks aus der Mehrzahl von parallelen Partitionspaketnetzwerken und Senden oder Empfangen eines Datenpakets durch das ausgewählte erste parallele Partitionspaketnetzwerk oder das zweite parallele Partitionspaketnetzwerk unabhängig von den anderen parallelen Partitionspaketnetzwerken ausgelegt ist, wobei das Senden ein Schalten des Datenpakets durch den parallelen Einheitenebenen-Partitionsschalter des ausgewählten parallelen Partitionspaketnetzwerks auf der Einheitenhierarchieebene umfasst; und
einen ersten Die, einen zweiten Die und eine Mehrzahl von Die-zu-Die-Kommunikationskanälen, wobei jedes parallele Partitionspaketnetzwerk einen Die-zu-Die-Kommunikationskanal der Mehrzahl von Die-zu-Die-Kommunikationskanälen aufweist, der mit dem ersten und dem zweiten Die gekoppelt ist, wobei die Einheit der Mehrzahl von Blöcken und der parallelen Einheitenebenen-Partitionsschalter der Mehrzahl von parallelen Partitionspaketnetzwerken auf dem ersten Die ist, die Vorrichtung ferner eine Mehrzahl von Puffern auf dem ersten Die umfasst, jedes parallele Partitionspaketnetzwerk einen Puffer aufweist, der mit dem parallelen Einheitenebenen-Partitionsschalter und dem Die-zu-Die-Kommunikationskanal des jeweiligen parallelen Partitionspaketnetzwerks gekoppelt ist, wobei die Logik zur Steuerung paralleler Partitionspaketnetzwerke ferner zum Puffern eines Datenpakets im Puffer des ausgewählten parallelen Partitionspaketnetzwerks vor dem Senden des Datenpakets an den Die-zu-Die-Kommunikationskanal des ausgewählten parallelen Partitionspaketnetzwerks und zum Puffern eines vom Die-zu-Die-Kommunikationskanal des ausgewählten parallelen Partitionspaketnetzwerks empfangenen Datenpakets im Puffer des ausgewählten parallelen Partitionspaketnetzwerks ausgelegt ist;
**gekennzeichnet durch**
eine Mehrzahl von Einheitenhierarchieebenen-Speichersteuerungen auf dem zweiten Die, wobei jede Einheitenebenen-Speichersteuerung zum Speichern von Speichertransaktionen zwischen dem Speicher und den Prozessoren einer assoziierten Einheit ausgelegt ist, einen Einheitenebenen-Schalter, der in eine Mehrzahl von parallelen Einheiten-Partitionsschaltern partitioniert ist, auf dem zweiten Die, wobei jedes parallele Partitionspaketnetzwerk mit einem parallelen Einheitsebenen-Partitionsschalter der Mehrzahl von parallelen Einheiten-Partitionsschaltern auf dem zweiten Die assoziiert ist, und einen Puffer der Mehrzahl von Puffern auf dem zweiten Die, wobei jeder parallele Einheitenebenen-Partitionsschalter auf dem zweiten Die mit dem parallelen Einheitenebenen-Partitionsschalter und dem Puffer des jeweiligen parallelen Partitionspaketnetzwerks auf dem ersten Die gekoppelt ist,
wobei jede Speichersteuerung Logik zur Steuerung paralleler Partitionspaketnetzwerke auf dem zweiten Die aufweist, die zum Schalten eines Datenpakets durch den parallelen Einheitenebenen-Partitionsschalter des ausgewählten parallelen Partitionspaketnetzwerks auf dem zweiten Die, Puffern eines Datenpakets im Puffer des ausgewählten parallelen Partitionspaketnetzwerks auf dem zweiten Die vor dem Senden des Datenpakets an den Die-zu-Die-Kommunikationskanal des ausgewählten parallelen Partitionspaketnetzwerks und Puffern eines vom Die-zu-Die-Kommunikationskanal des ausgewählten parallelen Partitionspaketnetzwerks auf dem zweiten Die empfangenen Datenpakets im Puffer auf dem zweiten Die ausgelegt ist.

2. Vorrichtung nach Anspruch 1, ferner umfassend: eine Mehrzahl der Einheiten, die eine Einheit-zu-Einheit-Hierarchieebene definiert, die höher als die Einheitenhierarchieebene ist, wobei jede Einheit auf der Einheitenhierarchieebene ist und eine Mehrzahl der Blöcke auf der Blockhierarchieebene umfasst, wobei jedes parallele Partitionspaketnetzwerk einen parallelen Einheitenebenen-Partitionsschalter auf der Einheitenhierarchieebene für jede Einheit und gekoppelt mit jedem Blocknetzwerk der Mehrzahl von Blöcken der jeweiligen Einheit und einen Einheit-zu-Einheit-Ebenen-Schalter (220a) auf der Einheit-zu-Einheit-Hierarchieebene und gekoppelt mit jedem parallelen Einheitenebenen-Partitionsschalter des jeweiligen parallelen Partitionspaketnetzwerks auf der Einheitenhierarchieebene aufweist, wobei die Logik zur Steuerung paralleler Partitionspaketnetzwerke ferner zum Schalten des Datenpakets durch den Einheit-zu-Einheit-Ebenen-Schalter des ausgewählten parallelen Partitionspaketnetzwerks auf der Einheit-zu-Einheit-Hierarchieebene zwischen ausgewählten parallelen Einheitenebenen-Partitionsschaltern des ausgewählten parallelen Partitionspaketnetzwerks ausgelegt ist.

3. Vorrichtung nach einem der Ansprüche 1 bis 2, ferner umfassend: einen gemeinsamen Kommunikationskanal zum Übertragen von Datenpaketen von jedem der Mehrzahl von parallelen Partitionspaketnetzwerken, wobei jedes durch den gemeinsamen Kommunikationskanal übertragene Datenpaket eine Markierung aufweist, die ein paralleles Partitionspaketnetzwerk identifiziert, und einen gemeinsamen Einheitenebenen-Schalter, der mit jedem parallelen Partitionspaketnetzwerk der Mehrzahl von parallelen Partitionspaketnetzwerken gekoppelt ist, wobei die Logik zur Steuerung paralleler Partitionspaketnetzwerke zum Markieren eines Datenpakets von jedem parallelen Partitionspaketnetzwerk mit einer Markierung zum Identifizieren des parallelen Partitionspaketnetzwerks, von dem das Paket ankam, und Schalten des markierten Datenpakets durch den gemeinsamen Einheitsebenen-Schalter zum gemeinsamen Kommunikationskanal ausgelegt ist.

4. Vorrichtung nach Anspruch 3, wobei die Logik zur Steuerung paralleler Partitionspaketnetzwerke zum Lesen einer Markierung eines Datenpakets vom gemeinsamen Kommunikationskanal und Schalten des Datenpakets durch den gemeinsamen Einheitenebenen-Schalter zu dem durch die Markierung des Datenpakets identifizierten parallelen Partitionspaketnetzwerk ausgelegt ist.

5. Verfahren zum Leiten von Datenpaketen in mindestens einer integrierten Schaltung, umfassend:
Auswählen (1024) durch eine Logik zur Steuerung paralleler Partitionspaketnetzwerke eines ersten und eines zweiten parallelen Partitionspaketnetzwerks aus einer aus einem hierarchischen Netzwerk partitionierten Mehrzahl von parallelen Partitionspaketnetzwerken, Koppeln eines Speichers einer Vorrichtung mit einer Mehrzahl von Blöcken, die eine Blockhierarchieebene definieren, wobei jeder Block eine Mehrzahl von Prozessoren und ein Blocknetzwerk umfasst, das die Prozessoren des Blocks miteinander verbindet, wobei eine Mehrzahl der Blöcke in mindestens einer Einheit organisiert ist, die eine Einheitenhierarchieebene definiert, die höher als die erste Hierarchieebene ist, jedes parallele Partitionspaketnetzwerk einen parallelen Einheitenebenen-Partitionsschalter auf der Einheitenhierarchieebene aufweist, der mit dem Speicher und jedem Blocknetzwerk der Mehrzahl von Blöcken der Einheit gekoppelt ist, wobei jeder parallele Einheitenebenen-Partitionsschalter aus einem Einheitenebenen-Schalter partitioniert ist, der die Mehrzahl von Blöcken der Einheiten miteinander verbindet, wobei jeder parallele Einheitenebenen-Partitionsschalter von den anderen parallelen Einheitenebenen-Partitionsschaltern unabhängig ist;
Senden (1028) durch die Logik zur Steuerung paralleler Partitionspaketnetzwerke eines Datenpakets eines ersten Prozessors eines ersten Blocks der Mehrzahl von Blöcken durch das ausgewählte erste parallele Partitionspaketnetzwerk unabhängig von den anderen parallelen Partitionspaketnetzwerken;
Senden (1028) durch die Logik zur Steuerung paralleler Partitionspaketnetzwerke eines Datenpakets eines zweiten Prozessors des ersten Blocks durch das ausgewählte zweite parallele Partitionspaketnetzwerk unabhängig von den anderen parallelen Partitionspaketnetzwerken;
wobei das Senden ein Schalten (1040) des Datenpakets durch einen parallelen Einheitenebenen-Partitionsschalter des ausgewählten parallelen Partitionspaketnetzwerks auf der Einheitenhierarchieebene umfasst;
Konfigurieren des ersten Prozessors zum Senden und Empfangen von Datenpaketen über das ausgewählte erste parallele Partitionspaketnetzwerk und des zweiten Prozessors zum Senden und Empfangen von Datenpaketen über das ausgewählte zweite parallele Partitionspaketnetzwerk, wobei das zweite parallele Partitionspaketnetzwerk vom ersten parallelen Partitionspaketnetzwerk unabhängig ist, wobei dem ersten Prozessor und dem zweiten Prozessor jeweilige Prioritäten zum Senden oder Empfangen der Datenpakete über das erste parallele Partitionspaketnetzwerk bzw. das zweite parallele Partitionspaketnetzwerk zugewiesen werden; und
Puffern durch die Logik zur Steuerung paralleler Partitionspaketnetzwerke auf einem ersten Die eines Datenpakets in einem Puffer des ausgewählten parallelen Partitionspaketnetzwerks, wobei jedes parallele Partitionspaketnetzwerk einen Puffer und einen Die-zu-Die-Kommunikationskanal auf der Einheitenhierarchieebene aufweist, jeder Puffer eines parallelen Partitionspaketnetzwerks mit dem Die-zu-Die-Kommunikationskanal und dem parallelen Einheitenebenen-Partitionsschalter des jeweiligen parallelen Partitionspaketnetzwerks gekoppelt ist, wobei das Verfahren ferner umfasst, dass die Logik zur Steuerung paralleler Partitionspaketnetzwerke ein Datenpaket aus einem Puffer an den Die-zu-Die-Kommunikationskanal des ausgewählten parallelen Partitionspaketnetzwerks sendet, ein Datenpaket vom Die-zu-Die-Kommunikationskanal des ausgewählten parallelen Partitionspaketnetzwerks empfängt und das empfangene Datenpaket im Puffer des ausgewählten parallelen Partitionspaketnetzwerk puffert;
**gekennzeichnet durch**
Steuern durch eine Einheitenebenen-Speichersteuerung einer Mehrzahl von Einheitenhierarchieebenen-Speichersteuerungen auf einem zweiten Die von Speichertransaktionen zwischen dem Speicher und den Prozessoren einer assoziierten Einheit, wobei jede Einheit eine assoziierte Speichersteuerung der Mehrzahl von Einheitenebenen-Speichersteuerungen auf dem zweiten Die aufweist;
Schalten durch die Logik zur Steuerung paralleler Partitionspaketnetzwerke auf dem zweiten Die eines vom Die-zu-Die-Kommunikationskanal des ausgewählten parallelen Partitionspaketnetzwerks empfangenen Datenpakets durch einen parallelen Einheitenebenen-Partitionsschalter des ausgewählten parallelen Partitionspaketnetzwerks auf dem zweiten Die, wobei jedes parallele Partitionspaketnetzwerk einen parallelen Einheitenebenen-Partitionsschalter einer Mehrzahl von parallelen Einheitenebenen-Partitionsschaltern auf dem zweiten Die aufweist;
Puffern durch Logik zur Steuerung paralleler Partitionspaketnetzwerke auf dem zweiten Die eines vom Die-zu-Die-Kommunikationskanal des ausgewählten parallelen Partitionspaketnetzwerks empfangenen Datenpakets in einem Puffer des ausgewählten parallelen Partitionspaketnetzwerks, wobei jedes parallele Partitionspaketnetzwerk einen Puffer einer Mehrzahl von Puffern auf dem zweiten Die aufweist, der mit dem parallelen Einheitenebenen-Partitionsschalter des jeweiligen parallelen Partitionspaketnetzwerks gekoppelt ist, wobei jeder parallele Einheitenebenen-Partitionsschalter auf dem zweiten Die mit dem Die-zu-Die-Kommunikationskanal des jeweiligen parallelen Partitionspaketnetzwerks gekoppelt ist; und
Schalten durch die Logik zur Steuerung paralleler Partitionspaketnetzwerke auf dem zweiten Die eines Datenpakets durch einen parallelen Einheitenebenen-Partitionsschalter des ausgewählten parallelen Partitionspaketnetzwerks auf dem zweiten Die, Puffern eines Datenpakets im Puffer des ausgewählten parallelen Partitionspaketnetzwerks auf dem zweiten Die und Senden eines Datenpakets aus dem Puffer des ausgewählten parallelen Partitionspaketnetzwerks an den Die-zu-Kommunikationskanal des ausgewählten parallelen Partitionspaketnetzwerks.

6. Verfahren nach Anspruch 5, ferner umfassend:
Schalten durch die Logik zur Steuerung paralleler Partitionspaketnetzwerke des Datenpakets durch einen Einheit-zu-Einheit-Ebenen-Schalter des ausgewählten parallelen Partitionspaketnetzwerks auf einer Einheit-zu-Einheit-Hierarchieebene zwischen ausgewählten parallelen Einheitenebenen-Partitionsschaltern des ausgewählten parallelen Partitionspaketnetzwerks,
wobei eine Mehrzahl der Einheiten die Einheit-zu-Einheit-Ebene einer dritten Hierarchieebene definiert, die höher als die zweite Hierarchieebene ist, wobei jede Einheit auf der Einheitenhierarchieebene ist und eine Mehrzahl der Blöcke auf der Blockhierarchieebene umfasst, wobei jedes parallele Partitionspaketnetzwerk einen parallelen Einheitenebenen-Partitionsschalter auf der Einheitenhierarchieebene für jede Einheit und gekoppelt mit dem Speicher und mit jedem Blocknetzwerk der Mehrzahl von Blöcken der jeweiligen Einheit und einen Einheit-zu-Einheit-Ebenen-Schalter auf der Einheit-zu-Einheit-Hierarchieebene und gekoppelt mit jedem parallelen Einheitenebenen-Partitionsschalter des jeweiligen parallelen Partitionspaketnetzwerks auf der Einheitenhierarchieebene aufweist.

7. Verfahren nach Anspruch 5, ferner umfassend: Markieren durch die Logik zur Steuerung paralleler Partitionspaketnetzwerke eines Datenpakets, das vom ausgewählten parallelen Partitionspaketnetzwerk ankommt, mit einer Markierung zum Identifizieren des ausgewählten parallelen Partitionspaketnetzwerks, von dem das Datenpaket ankam, und Schalten des markierten Datenpakets durch einen gemeinsamen Einheitenebenen-Schalter zu einem mit jedem parallelen Partitionspaketnetzwerk der Mehrzahl von parallelen Partitionspaketnetzwerken gekoppelten gemeinsamen Kommunikationskanal zum Übertragen von Datenpaketen von jedem der Mehrzahl von parallelen Partitionspaketnetzwerken, wobei jedes durch den Kommunikationskanal übertragene Datenpaket eine Markierung aufweist, die ein paralleles Partitionspaketnetzwerk identifiziert, von dem das markierte Datenpaket ankam.

8. Nicht-transitorisches computerlesbares Medium, umfassend: ausführbare Anweisungen, die bei Ausführung durch einen auf einer integrierten Schaltung innerhalb der Vorrichtung nach Anspruch 1 angeordneten Prozessor den Prozessor zum Durchführen des Verfahrens nach einem der Ansprüche 5 bis 7 veranlassen.

## Revendications

1. Dispositif informatique à utiliser avec une mémoire (104), comprenant :
une pluralité de blocs (200a-n) définissant un niveau hiérarchique de bloc, chaque bloc comprenant une pluralité de processeurs (310a-n) et un réseau de bloc (320) interconnectant les processeurs (310a-n) du bloc ;
un commutateur de niveau unité (208a) interconnectant une pluralité desdits blocs (200a-n) pour former une unité (210a), le commutateur de niveau unité (208a) étant subdivisé en une pluralité de commutateurs de partitions parallèles de niveau unité (410a-n), chaque commutateur de partition parallèle de niveau unité étant indépendant des autres commutateurs de partitions parallèles de niveau unité (410a-n), l'unité définissant une unité d'un niveau hiérarchique d'unité supérieur au niveau hiérarchique de bloc ; et
un réseau hiérarchique subdivisé en une pluralité de réseaux de paquets de partitions parallèles, chaque réseau de paquets de partition parallèle étant indépendant des autres réseaux de paquets de partitions parallèles, chaque réseau de paquets de partition parallèle ayant un commutateur de partition parallèle de niveau unité de la pluralité de commutateurs de partitions parallèles de niveau unité (410a-n) au niveau hiérarchique d'unité couplé à chaque réseau de bloc (320) de la pluralité de blocks de l'unité ;
un premier processeur (310a) d'un premier block (200a) de la pluralité de blocs (200a-n) configuré pour transmettre ou recevoir des paquets de données sur un premier réseau de paquets de partition parallèle sélectionné parmi la pluralité de réseaux de paquets de partitions parallèles, et un deuxième processeur (310b) du premier bloc (200a) de la pluralité de blocs (200an) configuré pour transmettre ou recevoir des paquets de données sur un deuxième réseau de paquets de partition parallèle sélectionné parmi la pluralité de réseaux de paquets de partitions parallèles, le deuxième réseau de paquets de partition parallèle étant indépendant du premier réseau de paquets de partition parallèle, le premier processeur et le deuxième processeur ayant des priorités respectives qui leur sont attribuées pour la transmission ou la réception des paquets de données sur respectivement le premier réseau de paquets de partition parallèle et le deuxième réseau de paquets de partition parallèle ;
une logique de commande de réseau de paquets de partition parallèle conçue pour sélectionner le premier réseau de paquets de partition parallèle ou le deuxième réseau de paquets de partition parallèle parmi la pluralité de réseaux de paquets de partitions parallèles, et pour transmettre ou recevoir un paquet de données sur le premier réseau de paquets de partition parallèle ou le deuxième réseau de paquets de partition parallèle sélectionné, indépendant des autres réseaux de paquets de partitions parallèles, ladite transmission comprenant la commutation du paquet de données via le commutateur de partition parallèle de niveau unité du réseau de paquets de partition parallèle sélectionné au niveau hiérarchique d'unité ; et
une première puce, une deuxième puce et une pluralité de canaux de communication inter-puces, chaque réseau de paquets de partition parallèle ayant un canal de communication inter-puces de la pluralité de canaux de communication inter-puces, couplé aux première et deuxième puces, l'unité de la pluralité de blocs et les commutateurs de partitions parallèles de niveau unité de la pluralité de réseaux de paquets de partitions parallèles se trouvent sur la première puce, le dispositif comprenant en outre une pluralité de mémoires tampons sur la première puce, chaque réseau de paquets de partition parallèle ayant une mémoire tampon couplée au commutateur de partition parallèle de niveau unité et au canal de communication inter-puces du réseau de paquets de partition parallèle particulier, la logique de commande de réseau de paquets de partition parallèle étant en outre conçue pour mettre un paquet de données en mémoire tampon dans la mémoire tampon du réseau de paquets de partition parallèle sélectionné avant la transmission du paquet de données au canal de communication inter-puces du réseau de paquets de partition parallèle sélectionné, et pour mettre en mémoire tampon un paquet de données reçu du canal de communication inter-puces du réseau de paquets de partition parallèle sélectionné dans la mémoire tampon du réseau de paquets de partition parallèle sélectionné ;
**caractérisé en ce que** :
une pluralité de contrôleurs de mémoire de niveau hiérarchique d'unité est prévue sur la deuxième puce, chaque contrôleur de mémoire de niveau unité étant conçu pour commander des transactions de mémoire entre la mémoire et les processeurs d'une unité associée, un commutateur de niveau unité subdivisé en une pluralité de commutateurs de partitions parallèles de niveau unité sur la deuxième puce, chaque réseau de paquets de partition parallèle étant associé à un commutateur de partition parallèle de niveau unité de la pluralité de commutateurs de partitions parallèles de niveau unité sur la deuxième puce, et une mémoire tampon de la pluralité de mémoires tampons sur la deuxième puce, chaque commutateur de partition parallèle de niveau unité étant couplé au commutateur de partition parallèle de niveau unité et à la mémoire tampon du réseau de paquets de partition parallèle particulier sur la première puce,
chaque contrôleur de mémoire ayant une logique de commande de réseau de paquets de partition parallèle sur la deuxième puce, conçue pour commuter un paquet de données via le commutateur de partition parallèle de niveau unité du réseau de paquets de partition sélectionné parallèle sur la deuxième puce, pour mettre un paquet de données en mémoire tampon dans la mémoire tampon du réseau de paquets de partition parallèle sélectionné avant la transmission du paquet de données au canal de communication inter-puces du réseau de paquets de partition parallèle sélectionné, et pour mettre en mémoire tampon un paquet de données reçu du canal de communication inter-puces du réseau de paquets de partition parallèle sélectionné dans la mémoire tampon sur la deuxième puce.

2. Dispositif selon la revendication 1, comprenant en outre : une pluralité desdites unités définissant un niveau hiérarchique inter-unités supérieur au niveau hiérarchique d'unité, chaque unité étant au niveau hiérarchique d'unité et comprenant une pluralité desdits blocs au niveau hiérarchique de bloc, chaque réseau de paquets de partition parallèle ayant un commutateur de partition parallèle de niveau unité au niveau hiérarchique d'unité pour chaque unité et étant couplé à chaque réseau de bloc de la pluralité de blocs de l'unité particulière, et un commutateur de niveau inter-unités (220a) au niveau hiérarchique inter-unités et étant couplé à chaque commutateur de partition parallèle de niveau unité du réseau de paquets de partition parallèle particulier au niveau hiérarchique d'unité, la logique de commande de réseau de paquets de partition parallèle étant en outre conçue pour commuter le paquet de données via le commutateur de niveau inter-unités du réseau de paquets de partition parallèle sélectionné au niveau hiérarchique inter-unités, entre des commutateurs de partitions parallèles d'unité sélectionnés du réseau de paquets de partition parallèle sélectionné.

3. Dispositif selon l'une quelconque des revendications 1 à 2, comprenant en outre : un canal de communication commun pour transporter des paquets de données provenant de chaque réseau de la pluralité de réseaux de paquets de partitions parallèles, chaque paquet de données transporté par le canal de communication commun ayant une étiquette identifiant un réseau de paquets de partition parallèle, et un commutateur de niveau unité commun couplé à chaque réseau de paquets de partition parallèle de la pluralité de réseaux de paquets de partitions parallèles, la logique de commande de réseau de paquets de partition parallèle étant conçue pour étiqueter un paquet de données provenant de chaque réseau de paquets de partition parallèle avec une étiquette pour identifier le réseau de paquets de partition parallèle d'où est arrivé le paquet, et commuter le paquet de données étiqueté via le commutateur de niveau unité commun sur le canal de communication commun.

4. Dispositif selon la revendication 3, dans lequel la logique de commande de réseau de paquets de partition parallèle est conçue pour lire une étiquette d'un paquet de données provenant du canal de communication commun, et pour commuter le paquet de données via le commutateur de niveau unité commun vers le réseau de paquets de partition parallèle identifié par l'étiquette du paquet de données.

5. Procédé de routage de paquets de données dans au moins un circuit intégré, comprenant :
la sélection (1024), par une logique de commande de réseau de paquets de partition parallèle, d'un premier et un deuxième réseaux de paquets de partitions parallèles parmi une pluralité de réseaux de paquets de partitions parallèles subdivisés à partir d'un réseau hiérarchique, le couplage d'une mémoire d'un dispositif à une pluralité de blocs définissant un niveau hiérarchique de bloc, chaque bloc comprenant une pluralité de processeurs et un réseau de bloc interconnectant les processeurs du bloc, une pluralité desdits blocs étant organisée en au moins une unité définissant un niveau hiérarchique d'unité supérieur au premier niveau hiérarchique, chaque réseau de paquets de partition parallèle ayant un commutateur de partition parallèle de niveau unité au niveau hiérarchique d'unité couplé à la mémoire et à chaque réseau de bloc de la pluralité de blocs de l'unité, chaque commutateur de partition parallèle de niveau unité étant subdivisé à partir d'un commutateur de niveau unité interconnectant la pluralité de blocs de l'unité, chaque commutateur de partition parallèle de niveau unité étant indépendant des autres commutateurs de partitions parallèles de niveau unité ;
la transmission (1028), par la logique de commande de réseau de paquets de partition parallèle, d'un paquet de données d'un premier processeur d'un premier bloc de la pluralité de blocs via le premier réseau de paquets de partition parallèle sélectionné indépendant des autres réseaux de paquets de partitions parallèles ;
la transmission (1028), par la logique de commande de réseau de paquets de partition parallèle, d'un paquet de données d'un deuxième processeur du premier bloc via le deuxième réseau de paquets de partition parallèle sélectionné indépendant des autres réseaux de paquets de partitions parallèles ;
ladite transmission comprenant la commutation (1040) du paquet de données via un commutateur de partition parallèle de niveau unité du réseau de paquets de partition parallèle sélectionné au niveau hiérarchique d'unité ;
la configuration du premier processeur pour la transmission ou la réception de paquets de données sur le premier réseau de paquets de partition parallèle sélectionné, et le deuxième processeur pour la transmission ou la réception de paquets de données sur le deuxième réseau de paquets de partition parallèle sélectionné, le deuxième réseau de paquets de partition parallèle étant indépendant du premier réseau de paquets de partition parallèle, le premier processeur et le deuxième processeur ayant des priorités respectives qui leur sont attribuées pour la transmission ou la réception des paquets de données sur respectivement le premier réseau de paquets de partition parallèle et le deuxième réseau de paquets de partition parallèle ; et
la mise en mémoire tampon, par la logique de commande de réseau de paquets de partition parallèle, sur une première puce, d'un paquet de données dans une mémoire tampon du réseau de paquets de partition parallèle sélectionné, chaque réseau de paquets de partition parallèle ayant une mémoire tampon et un canal de communication inter-puces au niveau hiérarchique d'unité, chaque mémoire tampon d'un réseau de paquets de partition parallèle étant couplé au canal de communication inter-puce et au commutateur de partition parallèle de niveau unité du réseau de paquets de partition parallèle particulier, le procédé comprenant en outre une logique de commande de réseau de paquets de partition parallèle transmettant un paquet de données d'une mémoire tampons à un canal de communication inter-puces du réseau de paquets de partition parallèle sélectionné, recevant un paquet de données en provenance du canal de communication inter-puces du réseau de paquets de partition parallèle sélectionné, et mettant en mémoire tampon le paquet de données reçu dans la mémoire tampon du réseau de paquets de partition parallèle sélectionné ;
**caractérisé en ce que** :
la commande, par un contrôleur de mémoire de niveau unité d'une pluralité de contrôleurs de mémoire de niveau hiérarchique d'unité sur une deuxième puce, de transactions de mémoire entre une mémoire et les processeurs d'une unité associée, chaque unité ayant un contrôleur de mémoire associé de la pluralité de contrôleurs de mémoire de niveau unité sur la deuxième puce ;
la commutation, par une logique de commande de réseau de paquets de partition parallèle sur la deuxième puce, d'un paquet de données reçu du canal de communication inter-puces du réseau de paquets de partition parallèle sélectionné, via un commutateur de partitions parallèles de niveau unité du réseau de paquets de partition parallèle sélectionné sur la deuxième puce, chaque réseau de paquets de partition parallèle ayant un commutateur de partition parallèle de niveau unité d'une pluralité de commutateurs de partition parallèle de niveau unité sur la deuxième puce ; et
la mise en mémoire tampon, par une logique de commande de réseau de paquets de partition parallèle sur la deuxième puce, d'un paquet de données reçu du canal de communication inter-puces du réseau de paquets de partition parallèle sélectionné dans une mémoire tampon du réseau de paquets de partition parallèle sélectionné, chaque réseau de paquets de partition parallèle ayant une mémoire tampon d'une pluralité de mémoires tampons sur la deuxième puce, couplée au commutateur de partition parallèle de niveau unité du réseau de paquets de partition parallèle particulier, chaque commutateur de partitions parallèles de niveau unité sur la deuxième puce étant couplé au canal de communication inter-puce du réseau de paquets de partition parallèle particulier ; et
la commutation, par la logique de commande de réseau de paquets de partition parallèle sur la deuxième puce, d'un paquet de données via un commutateur de partition parallèle de niveau unité du réseau de paquets de partition parallèle sélectionné sur la deuxième puce, la mise en mémoire tampon d'un paquet de données dans la mémoire tampon du réseau de paquets de partition parallèle sélectionné sur la deuxième puce, et la transmission d'un paquet de données de la mémoire tampon du réseau de paquets de partition parallèle sélectionné au canal de communication inter-puces du réseau de paquets de partition parallèle sélectionné.

6. Procédé selon la revendication 5, comprenant en outre :
la commutation, par la logique de commande de réseau de paquets de partition parallèle, du paquet de données via un commutateur de niveau inter-unités du réseau de paquets de partition parallèle sélectionné à un niveau hiérarchique inter-unités, entre des commutateurs de partitions parallèles de niveau unité sélectionnés du réseau de paquets de partition parallèle sélectionné,
une pluralité desdites unités définissant le niveau inter-unité d'un troisième niveau hiérarchique supérieur au deuxième niveau hiérarchique, chaque unité étant au niveau hiérarchique d'unité et comprenant une pluralité desdits blocs au niveau hiérarchique de bloc, chaque réseau de paquets de partition parallèle ayant un commutateur de partition parallèle de niveau unité au niveau hiérarchique d'unité pour chaque unité et couplé à la mémoire et à chaque réseau de bloc de la pluralité de blocs de l'unité particulière, et un commutateur de niveau inter-unités au niveau hiérarchique inter-unité et couplé à chaque commutateur de partition parallèle de niveau unité du réseau de paquets de partition parallèle particulier au niveau hiérarchique d'unité.

7. Procédé selon la revendication 5, comprenant en outre : l'étiquetage, par une logique de commande de réseau de paquets de partition parallèle, d'un paquet de données arrivant du réseau de paquets de partition parallèle sélectionné avec une étiquette pour identifier le réseau de paquets de partition parallèle sélectionné d'où est arrivé le paquet de données, et la commutation du paquet de données étiqueté via un commutateur de niveau unité commun sur un canal de communication commun couplé à chaque réseau de paquets de partition parallèle de la pluralité de réseaux de paquets de partitions parallèles, pour le transport de paquets de données depuis chaque réseau de la pluralité de réseaux de paquets de partitions parallèles, chaque paquet de données transporté par le canal de communication commun ayant une étiquette identifiant un réseau de paquets de partition parallèle d'où est arrivé le paquet de données étiqueté.

8. Support non-transitoire lisible par un ordinateur, comprenant : des instructions exécutables qui, lorsqu'elles sont exécutées par un processeur sur un circuit intégré dans le dispositif défini dans la revendication 1, amènent le processeur à exécuter le procédé selon l'une quelconque des revendications 5 à 7.
